**Europäisches Patentamt**

**European Patent Office**

**Office européen des brevets**

(19)

(11) **EP 1 396 894 A2**

(12) **EUROPEAN PATENT APPLICATION**

(43) Date of publication:
**10.03.2004 Bulletin 2004/11**

(51) Int Cl.⁷: **H01M 4/38**, H01M 10/40

(21) Application number: **03019989.7**

(22) Date of filing: **03.09.2003**

| | |
|---|---|
| (84) Designated Contracting States:<br>**AT BE BG CH CY CZ DE DK EE ES FI FR GB GR HU IE IT LI LU MC NL PT RO SE SI SK TR**<br>Designated Extension States:<br>**AL LT LV MK**<br><br>(30) Priority: **06.09.2002 JP 2002262036**<br><br>(71) Applicants:<br>• **MATSUSHITA ELECTRIC INDUSTRIAL CO., LTD.**<br>  **Kadoma-shi, Osaka 571-8501 (JP)**<br>• **SUMITOMO METAL INDUSTRIES, LTD.**<br>  **Osaka-shi, Osaka 541-0041 (JP)**<br><br>(72) Inventors:<br>• **Shimamura, Harunari**<br>  **Moriguchi-shi Osaka 570-0034 (JP)** | • **Nakamato, Takayuki**<br>  **Sakai-shi Osaka 590-0111 (JP)**<br>• **Ohyama, Hideaki**<br>  **Chigasaki-shi Kanagawa 253-0001 (JP)**<br>• **Bito, Yasuhiko**<br>  **Minamikawachi-gun Osaka 587-0032 (JP)**<br><br>(74) Representative:<br>**Schwarzensteiner, Marie-Luise, Dr. et al**<br>**Grape & Schwarzensteiner**<br>**Patentanwälte**<br>**Sebastiansplatz 7**<br>**80331 München (DE)** |

(54) **Negative electrode material for non-aqueous electrolyte secondary battery, method for producing the same and non-aqueous electrolyte secondary battery**

(57)    A negative electrode material for a non-aqueous electrolyte secondary battery of the present invention is a negative electrode material for a non-aqueous electrolyte secondary battery capable of reversibly absorbing and desorbing lithium, and it includes a solid phase A and a solid phase B that have different compositions and has a structure in which the surface around the solid phase A is entirely or partly covered by the solid phase B. The solid phase A contains at least one element selected from the group consisting of silicon, tin and zinc, and the solid phase B contains the above-described at least one element contained in the solid phase A, and at least one element selected from the group consisting of Group IIA elements, transition elements, Group IIB elements, Group IIIB elements and Group IVB elements. The atomic arrangement and structure (e.g., crystal structure or amorphous structure) of at least one solid phase selected from the group consisting of the solid phase A and the solid phase B are controlled. It is possible to provide a negative electrode material for a non-aqueous electrolyte secondary battery in which deterioration due to charge/discharge cycle characteristics is suppressed, by using such a material as a negative electrode material for a non-aqueous electrolyte secondary battery. It is also possible to provide a non-aqueous electrolyte secondary battery having excellent charge/discharge cycle characteristics, by including such a negative electrode material for a non-aqueous electrolyte secondary battery.

FIG. 1

**Description**

The present invention relates to negative electrode materials for non-aqueous electrolyte secondary batteries, non-aqueous electrolyte secondary batteries using the same and methods for producing negative electrode materials for non-aqueous electrolyte secondary batteries.

In recent years, lithium secondary batteries having such characteristics as high electromotive force and high energy density have come to be used as power sources for mobile communications equipment, portable electronic equipment and the like. Use of lithium metal for the negative electrode materials provides lithium secondary batteries having the highest energy density. However, dendrites tend to be deposited at the negative electrode during charging, thereby possibly causing an internal short circuit during repeated charge/discharge. In addition, the deposited dendrites have a large specific surface area and thus have a high reaction activity, so that they react with solvents in electrolytes, forming on the surfaces solid electrolytic interfacial coatings that have no electronic conductivity. This also leads to a decrease in the charge/discharge efficiency of the batteries. As described above, lithium secondary batteries using lithium metal for the negative electrode materials have had the problems of reliability and cycle life characteristics.

At present, carbon materials capable of absorbing and desorbing lithium ions have been put into practical use as negative electrode materials for replacing lithium metal. In the case of these carbon materials, lithium normally is absorbed between their layers, so that the problems due to the dendrites, such as internal short circuits, can be avoided. However, the theoretical capacities of the above-described carbon materials, in general, are considerably smaller than that of lithium metal. For example, the theoretical capacity of graphite, which is one kind of the above-described carbon materials, is 372 mAh/g, about one-tenth that of lithium metal.

As other negative electrode materials, metallic materials and nonmetallic materials that form compounds with lithium are known, for example. For instance, silicon (Si), tin (Sn) and zinc (Zn) are capable of absorbing lithium until they have the compositions represented by $Li_{22}Si_5$, $Li_{22}Sn_5$ and LiZn, respectively. Normally, metallic lithium does not form dendrites within the range of the above-described compositions, so that the problems due to the dendrites, such as internal circuits, can be avoided. In addition, the theoretical capacities of the above-described materials are 4199 mAh/g, 993 mAh/g and 410 mAh/g, respectively, each of which is larger than the theoretical capacities of carbon materials such as graphite.

As other negative electrode materials that form compounds with lithium, negative electrode materials with improved charge/discharge cycle characteristics have been suggested, including silicides of nonferrous metals made of a transition element (e.g., described in JP07-240201A) and materials made of an intermetallic compound that contains at least one element selected from the group consisting of Group IVB elements, P and Sb, and that have one crystal structure selected from the group consisting of the $CaF_2$-type, the ZnS-type and the AlLiSi-type (e.g., described in JP09-063651A).

However, lithium secondary batteries using the above-described negative electrode materials have the following problems.

First, in the case of using metallic materials or nonmetallic materials that form compounds with lithium as the negative electrode materials, the charge/discharge cycle characteristics generally tend to be inferior as compared with the case of using carbon materials as the negative electrode materials. Although the reason for this is unknown, possible explanations are as follows.

For example, Si, which is one of the above-described nonmetallic materials, contains eight silicon atoms within its crystallographic unit cell (cubic, space group Fd-3m) when it is in the form of a simple substance. When converted from a lattice constant $a$ = 0.5420 nm, the unit cell volume is 0.1592 $nm^3$ and the volume occupied by one silicon atom is 19.9 $\times$ $10^{-3}$ $nm^3$. On the other hand, based on the phase diagram of the Si-Li binary system, it is believed that two phases, i.e., silicon as a simple substance and the compound $Li_{12}Si_7$, coexist in the early stage of the reaction in the process of forming a compound with lithium at room temperature. The crystallographic unit cell (rhombic, space group Pnma) of $Li_{12}Si_7$ contains 56 silicon atoms. When converted from its lattice constants $a$ = 0.8610 nm, $b$ = 1.9737 nm, $c$ = 1.4341 nm, the unit cell volume is 2.4372 $nm^3$ and the volume per silicon atom is 43.5 $\times$ $10^{-3}$ $nm^3$. Accordingly, the volume expands to 2.19 times when silicon as a simple substance absorbs lithium and turns into the compound $Li_{12}Si_7$.

In a state in which silicon as a simple substance and the compound $Li_{12}Si_7$ coexist in this way, partial conversion of silicon as a simple substance into the compound $Li_{12}Si_7$ causes a significant distortion, so that cracks or the like may occur. In addition, when even more lithium is absorbed, the compound $Li_{22}Si_5$, which contains the largest amount of Li, is formed as a final product. The crystallographic unit cell (cubic, space group F23) of $Li_{22}Si_5$ contains 80 silicon atoms. When converted from its lattice constant $a$ = 1.8750 nm, the unit cell volume is 6.5918 $nm^3$, and the volume per silicon atom is 82.4 $\times$ $10^{-3}$ $nm^3$. This value is 4.14 times that of silicon as a simple substance, indicating that the material has expanded further. In the case of using such a material for the negative electrode material, there is a significantly large difference in volume between during charge and during discharge, so that it is believed that a great distortion is caused in the material by repeated charge/discharge, leading to cracks or the like, and resulting in pulverized particles. It is believed that the charge/discharge capacity of a battery decreases when particles are pulverized, because void spaces formed between the particles cause a separation of the electron conducting network, thereby increasing the areas that cannot participate in an electrochemical reaction. The above-described phenomenon also occurs in the case of using tin or zinc (according to similar calculations, the volume changes by 3.59 times at most in the case of Sn, and 1.97 times at most in the case of Zn, between during charge and during discharge). For the above-described reasons, it is therefore believed that the charge/discharge cycle characteristics of batteries using negative electrodes including metallic materials or nonmetallic materials are inferior to those of batteries using negative electrodes including carbon materials.

On the other hand, in the case of the battery disclosed in JP07-240201A, which uses a silicide of nonferrous transition metal as the negative electrode material, the example of the publication shows that the charge/discharge cycle characteristics are improved as compared with those of batteries using lithium metal as the negative electrode material. However, the battery capacity increased only by about 12% at the maximum as compared with the battery using graphite, which is one kind of carbon material, as the negative electrode material. Therefore, although not explicitly mentioned in the specification of the publication, it is believed that it is difficult to increase the battery capacity significantly in the case of using a silicide of nonferrous metal including a transition element as the negative electrode material, as compared with the case of using a carbon material as the negative electrode material.

In the case of using the negative electrode material disclosed in JP09-063651A, it is shown that the charge/discharge cycle characteristics are more improved than in the case of using a Li-Pb alloy as the negative electrode material and that the capacity is higher than in the case of using graphite as the negative electrode material. The battery capacity, however, tends to decrease markedly after about 10 to 20 charge/discharge cycles. For example, even in the case of using $Mg_2Sn$, which is considered to have the best charge/discharge cycle characteristics, as the negative electrode material, the battery capacity decreases to approximately 70% of the initial capacity after about 20 cycles.

In addition, the negative electrode material disclosed in JP2000-030703A is a solid solution or an intermetallic compound made of the two phases, a solid phase A containing a specific element and a solid phase B, and realizes a battery having a higher capacity and a higher service life than a battery using a negative electrode material including graphite. However, in the above-described negative electrode material, the solid phase A, which is one of the two phases, has high crystallinity, so that the stress in the particles may be concentrated in one direction when lithium is absorbed. Consequently, there is a possibility of inducing a decrease in charge/discharge cycle characteristics due to destruction of the particles.

Therefore, with the foregoing in mind, it is an object of the present invention to provide a negative electrode material for a non-aqueous electrolyte secondary battery in which deterioration due to charge/discharge cycles is suppressed, and a non-aqueous electrolyte secondary battery having excellent charge/discharge cycle characteristics. It is another object of the present invention to provide the method for producing the above-described negative electrode material for a non-aqueous electrolyte secondary battery.

In order to achieve the above-described objects, the present invention provides a negative electrode material for a non-aqueous electrolyte secondary battery capable of reversibly absorbing and desorbing lithium, including a solid phase A and a solid phase B that have different compositions; and having a structure in which a surface around the solid phase A is entirely or partly covered by the solid phase B. The solid phase A contains at least one element selected from the group consisting of silicon, tin and zinc, the solid phase B contains said at least one element, and at least one element selected from the group consisting of Group IIA elements, transition elements, Group IIB elements, Group IIIB elements and Group IVB elements, and the solid phase A is in at least one state selected from the group consisting of an amorphous state and a low crystalline state.

The present invention also provides a negative electrode material for a non-aqueous electrolyte secondary battery capable of reversibly absorbing and desorbing lithium, including a solid phase A and a solid phase B that have different compositions; and having a structure in which a surface around the solid phase A is entirely or partly covered by the solid phase B. The solid phase A contains at least one element selected from the group consisting of silicon, tin and zinc, the solid phase B contains said at least one element, and at least one element selected from the group consisting of Group IIA elements, transition elements, Group IIB elements, Group IIIB elements and Group IVB elements, and a crystallite size of the solid phase A may be in the range of at least 5 nm and at most 100 nm.

It is possible to provide a negative electrode material for a non-aqueous electrolyte secondary battery in which deterioration due to charge/discharge cycles is suppressed, by controlling the solid phase A in this manner.

Furthermore, the present invention provides a negative electrode material for a non-aqueous electrolyte secondary battery capable of reversibly absorbing and desorbing lithium, including a solid phase A and a solid phase B that have different compositions; and having a structure in which a surface around the solid phase A is entirely or partly covered by the solid phase B. The solid phase A contains at least one element selected from the group consisting of silicon, tin and zinc, and the solid phase B contains said at least one element, and at least one element selected from the group consisting of Group IIA elements, transition elements, Group IIB elements, Group IIIB elements and Group IVB elements. The solid phase A contains a first crystal structure, and the solid phase B may contain a second crystal structure represented by a space group differing from the space group that represents the first crystal structure.

It is also possible to provide a negative electrode material for a non-aqueous electrolyte secondary battery in which deterioration due to charge/discharge cycles is suppressed, by controlling the solid phase B in this manner.

A non-aqueous electrolyte secondary battery according to the present invention includes a negative electrode containing any one of the negative electrode materials for a non-aqueous electrolyte secondary battery; a positive electrode capable of reversibly absorbing and desorbing lithium; and a non-aqueous electrolyte having lithium ion conductivity.

It is possible to obtain a non-aqueous electrolyte secondary battery having excellent charge/discharge cycle characteristics, by using any one of the above-described negative electrode materials for a non-aqueous electrolyte secondary battery as the negative electrode material.

A method for producing a negative electrode material for a non-aqueous electrolyte secondary battery according to the present invention includes: a first step of mixing a material containing at least one element selected from the group consisting of silicon, tin and zinc with a material containing at least one element selected from the group consisting of Group IIA elements, transition elements, Group IIB elements, Group IIIB elements and Group IVB elements, and melting the resulting material; a second step of forming a solidified material by quenching and solidifying the melted material; and a third step of obtaining a powder including a solid phase A and a solid phase B that have different compositions and having a structure in which a surface around the solid phase A is entirely or partly covered by the solid phase B, by performing a mechanical alloying process on the solidified material.

It is possible to obtain a negative electrode material for a non-aqueous electrolyte secondary battery in which deterioration due to charge/discharge cycles is suppressed, by using such a production method.

As described above, the present invention can provide a negative electrode material for a non-aqueous electrolyte secondary battery in which deterioration due to charge/discharge cycles is suppressed. The present invention also can provide a non-aqueous electrolyte secondary battery having excellent charge/discharge cycle characteristics by including the above-described negative electrode material for a non-aqueous electrolyte secondary battery. Moreover, the present invention can provide a method for producing such a negative electrode material for a non-aqueous electrolyte secondary battery.

It should be noted that the non-aqueous electrolyte secondary battery of the present invention can be used in a variety of applications, including portable information terminals, portable electronic equipment, small electrical energy storage devices for home use, and motor cycles, electric cars and hybrid electric cars that use a motor as power sources.

FIG. 1 is a graph showing an example of a wide angle X-ray diffraction measurement performed on negative electrode materials.

FIG. 2 is a graph showing another example of a wide angle X-ray diffraction measurement performed on a negative electrode material.

FIG. 3 is a cross-sectional view schematically showing an example of a non-aqueous electrolyte secondary battery according to the present invention.

*Embodiment 1*

First, the negative electrode material for a non-aqueous electrolyte secondary battery (hereinafter, "negative electrode material for a non-aqueous electrolyte secondary battery" is also simply referred to as "negative electrode material") according to the present invention is described.

The negative electrode material according to the present invention is a negative electrode material for anon-aqueous electrolyte secondary battery capable of reversibly absorbing and desorbing lithium (Li), and it includes a solid phase A and a solid phase B that have different compositions and has a structure in which a surface around the solid phase A is entirely or partly covered by the solid phase B. The negative electrode material may be in at least one form selected from the group consisting of, for example, a solid solution, an intermetallic compound and an alloy.

Here, the solid phase A contains at least one element selected from the group consisting of silicon, tin and zinc. The solid phase B contains the above-described at least one element contained in the solid phase A, and at least one element selected from the group consisting of Group IIA elements, transition elements, Group IIB elements, Group IIIB elements and Group IVB elements.

Examples of the Group IIA elements include Mg and Ca, examples of the transition element include Ti, V, Cr, Mn, Fe, Co, Ni, Cu, Y, Zr, Nb, Mo, Ru, Pd, La, Ta, W, Ce and Nd, and examples of the Group IIB elements include Cd. Examples of the Group IIIB elements include Ga and In, and examples of the Group IVB elements include C and Ge.

By further controlling at least one selected from the group consisting of the solid phase A and the solid phase B in the following manner, it is possible to provide a negative electrode material in which deterioration due to charge/ discharge cycles is suppressed.

In the following, the control of the solid phase A is described.

Like the negative electrode material of the present invention, the conventional negative electrode material disclosed in JP2000-030703A, for example, includes a solid phase A and a solid phase B having different compositions and has a structure in which the surface around the solid phase A is entirely or partly covered by the solid phase B. However, in the above-described conventional negative electrode material, the solid phase A has high crystallinity and a large area (e.g., about 5 μmφ to 10 μmφ, when observed by a scanning electron microscope (SEM)). For this reason, there is the possibility that the solid phase A may cause an expansion in a certain direction when the negative electrode material absorbs Li, leading to countless instances of particle cracking in the negative electrode material. When particle cracking occurs, a newly formed surface of the solid phase A reacts with Li, and Li is absorbed as a film on the newly formed surface, increasing irreversible Li (i.e., Li that does not contribute to the electrochemical reactions in the battery). When the irreversible Li increases, there is a possibility of a decrease in the battery capacity, leading to deterioration of the charge/discharge cycle characteristics.

On the other hand, in the negative electrode material of the present invention, the solid phase A is in at least one state selected from the group consisting of an amorphous state and a low crystalline state.

It is believed that when the solid phase A is in the state of such low crystallinity, the solid phase A is less likely to cause an expansion in a certain direction at the time of absorbing Li, and particle cracking in the negative electrode material tends not to occur. Therefore, it is possible to provide a negative electrode material in which deterioration due to charge/discharge cycles is suppressed, by controlling particle cracking in the negative electrode material as described above.

The state of the solid phase A can be found by performing, for example, a wide angle X-ray diffraction (WAXD) measurement on the negative electrode material. A WAXD measurement may be performed, for example, in the following manner.

First, a negative electrode material to be measured is filled into a sample holder, using a method that provides a sample having no orientation in any direction. The negative electrode material to be measured may be used in powdered form before producing the negative electrode. It is also possible to use a material obtained by collecting a negative electrode mixture after producing the negative electrode and sufficiently separating the particles with a mortar. In addition, the measurement error can be minimized for the diffraction angle and the diffraction intensity if a sample plane on which X-rays are incident is flat and the plane coincides with the axis of rotation of a goniometer at the time of the WAXD measurement.

The method that provides a sample having no orientation in any direction may be performed, for example, in the following manner. First, a sample to be measured is filled into a sample holder without applying any pressure. More specifically, after charging the sample into the sample holder, the surface of the sample may be covered with a flat plate such that the sample does not spill out of the sample holder. Thereafter, minute vibrations may be applied to the sample holder such that the sample does not spill out of the sample holder even after the flat plate is removed.

A WAXD measurement is performed on the sample prepared as above over a range of a diffraction angle $2\theta$ of 10° to 80°, using $CuK_{\alpha}$ radiation as the X-ray source, and it is determined whether any diffraction peak (peak) attributed to the crystal plane of the solid phase A is present on the obtained diffraction line. For example, when the solid phase A is made of Si, diffraction peaks are observed at the diffraction angles $2\theta$ = 28.4° (corresponding to the crystal plane (111)), 47.3° (corresponding to the crystal plane (220)), 56.1° (corresponding to the crystal plane (311)), 69.1° (corresponding to the crystal plane (400)), 76.4° (corresponding to the crystal plane (331)) and the like, reflecting the crystal plane of Si. When such peaks which are attributed to the crystal planes of the solid phase A are present, it can be said that the solid phase A is in the state of containing crystals. On the other hand, when the above-described peaks are not present, it can be said that the solid phase A is in at least one state selected from the group consisting of an amorphous state and a low crystalline state.

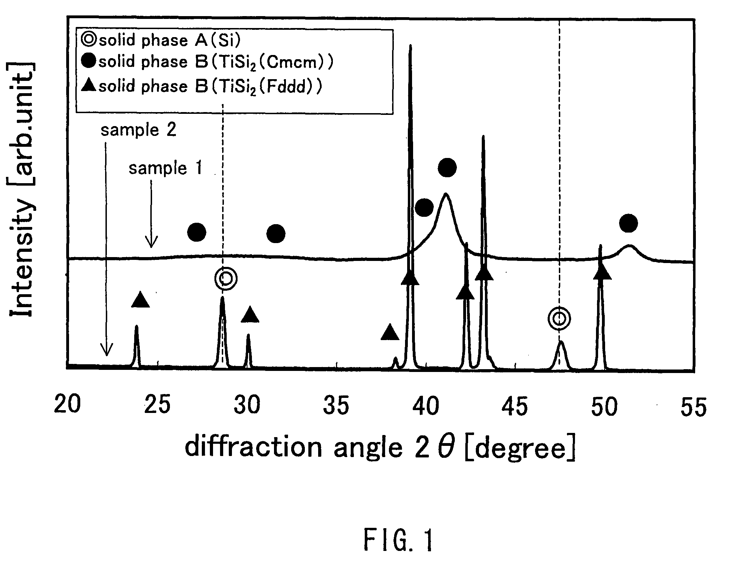

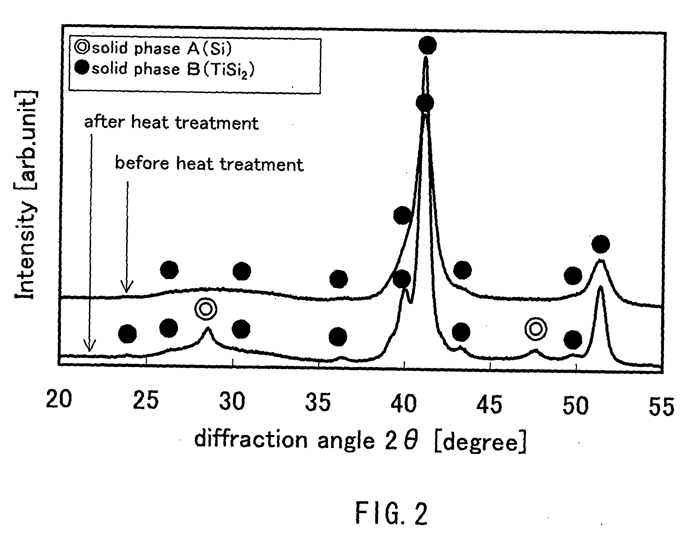

FIG. 1 shows an example of the above-described WAXD performed on a negative electrode material. FIG. 1 shows two types of samples, in both of which the composition of the solid phase A is Si and the composition of the solid phase B is $TiSi_2$. It should be noted that FIG. 1 shows, from the WAXD measurements performed over a range of a diffraction angle $2\theta$ of 10° to 80°, the measurement over a range of $2\theta$ of 20° to 55° as an example. The symbols "double circle", "black circle" and "black triangle" in FIG. 1 correspond to the positions of peaks attributed to the crystal planes of the solid phase A, peaks attributed to the crystal planes of the solid phase B in sample 1 and peaks attributed to the crystal planes of the solid phase B in sample 2, respectively. For the purpose of facilitating the readability of the graph, different base lines are used for the diffraction line of the sample 1 and that of the sample 2. In the below-described FIG. 2, the graph is depicted in the same manner. However, the symbol "black circle" in FIG. 2 corresponds to the position of peaks attributed to the crystal planes of the solid phase B.

From FIG. 1, it can be seen that not only peaks attributed to the crystal planes of the solid phase B, but also peaks attributed to the crystal planes of the solid phase A are present on the diffraction line of the sample 2. Therefore, it can be said that the solid phase A of the sample 2 is in the state of containing crystals. On the other hand, no peak attributed to the crystal planes of the solid phase A is shown on the diffraction line of the sample 1, although peaks attributed to the crystal planes of the solid phase B are shown. If the solid phase A were in the state of containing crystals, a peak would be present near substantially the same the scattering angles (i.e., near the dotted lines in FIG. 1) as the peaks attributed to the crystal planes of the solid phase A shown in the sample 2. Therefore, it can be said that the solid phase A of the sample 1 is in at least one state selected from the group consisting of an amorphous state and a low crystalline state. It should be noted that a conceivable reason why the scattering angles of the peaks attributed to the crystal planes of the solid phase B are different between the sample 1 and the sample 2 is that the solid phases B in the sample 1 and the sample 2 have crystal structures represented by different space groups.

The compositions of the solid phase A and the solid phase B in the negative electrode material can be determined by, for example, EDX (energy dispersive X-ray spectroscopy, which is also called "EDS").

In the negative electrode material of the present invention, the solid phase A also may be in a crystalline state in which the crystallite size is in the range of at least 5 nm and at most 100 nm.

By providing such a negative electrode material, it is possible to halt or "pin", by the grain boundaries between the crystallites, the dislocation and migration of the crystallites in the solid phase A due to the expansion of the solid phase A when the negative electrode material absorbs Li, thereby suppressing particle cracking. Accordingly, it is possible to provide a negative electrode material in which deterioration due to charge/discharge cycles is suppressed.

When the crystallite size of the solid phase A is more than 100 nm, the grain boundaries between the crystallites decrease, so that the effect of suppressing particle cracking may be reduced. On the other hand, when the crystallite size is less than 5 nm, the grain boundaries between the crystallites in the solid phase A increase further, thereby possibly reducing the electronic conductivity within the solid phase A, rather than increasing it. A reduced electronic conductivity may cause the overvoltage to increase, possibly leading to a decrease in the battery capacity.

The crystallite size in the solid phase A can be determined by, for example, the above-described WAXD measurement. For example, it may be obtained by performing the above-described WAXD measurement and applying Scherrer's equation (the following Equation (1)) to the peaks attributed to the crystal planes of the solid phase A on the obtained diffraction line.

According to Scherrer's equation, a crystallite size D of the solid phase A can be given by:

$$\text{crystallite size D (nm)} = 0.9 \times \lambda / (\beta \times \cos\theta) \tag{1}$$

wherein:

$\lambda$ = X-ray wavelength (nm) (1.5405 nm in the case of $CuK_\alpha$ radiation)
$\beta$ = half width of the above-described peak (rad)
$\theta$ = half value of the above-described peak angle $2\theta$ (rad).

Additionally, when a plurality of peaks attributed to the crystal planes of the solid phase A are present on the obtained diffraction line, the crystallite size of the solid phase A may be measured by applying Scherrer's equation to the main peak having the highest intensity.

The crystallite size of the solid phase A also may be measured by using an atomic force microscope (AFM), a transmission electron microscope (TEM) and the like.

Here, there are two possible cases when a heat treatment (e.g., temperature range: 100°C to 600°C, heat treatment time: approx. 1 hour, under an inert gas atmosphere) is performed on a negative electrode material in which the solid phase A is in at least one state selected from the group consisting of an amorphous state and a low crystalline state. One is that the solid phase A still maintains at least one state selected from the group consisting of an amorphous state and a low crystalline state, and the other is that the solid phase A is crystallized by the heat treatment. These two cases can be distinguished from each other by performing the above-described WAXD measurement after the heat treatment. It should be noted that the heat treatment temperature varies depending on the composition of the solid phase A. For example, it may be in the range of: 100°C to 180°C when the solid phase A is made of tin; 200°C to 300°C when the solid phase A is made of zinc; and 400°C to 600°C when the solid phase A is made of silicon.

FIG. 2 shows an example of a measurement performed on a negative electrode material in which the solid phase A is crystallized by performing a heat treatment (temperature: 500°C, heat treatment time: 1 hour, under an inert gas atmosphere). The diffraction line shown in FIG. 2 was obtained by performing the above-described WAXD measurement on negative electrode materials in which the composition of the solid phase A is Si and the composition of the solid phase B is $TiSi_2$. As shown in FIG. 2, no peak attributed to the crystal planes of the solid phase A is confirmed before the heat treatment, whereas peaks attributed to the crystal planes of the solid phase A are observed near a diffraction angle $2\theta = 28.4°$ and a diffraction angle $2\theta = 47.3°$ after the heat treatment.

When comparing a negative electrode material in which the solid phase A is crystallized by the heat treatment and a negative electrode material in which the solid phase A maintains at least one state selected from the group consisting of an amorphous state and a low crystalline state, it can be said that deterioration due to charge/discharge cycles is better suppressed in the latter. The reason is presumably that the size of the solid phase A is smaller in the latter and there are thus more grain boundaries in the solid phase A and the solid phase B in the negative electrode material. Therefore, it is possible to halt the expansion of the solid phase due to absorption of Li by the above-described grain boundaries, thereby suppressing particle cracking more effectively.

In the case where the solid phase A is crystallized by the heat treatment, it also can be said that deterioration due to charge/discharge cycles is better suppressed in a negative electrode material in which the crystallite size of the solid phase A is in the range of at least 5 nm and at most 100 nm after the heat treatment, than in a negative electrode material in which the crystallite size of the solid phase A exceeds 100 nm due to the heat treatment.

This also applies to a negative electrode material in which the solid phase A is in a crystalline state in which the crystallite size is in the range of at least 5 nm and at most 100 nm. In the case where the crystallization of the solid phase A is promoted by the heat treatment, it also can be said that deterioration due to charge/discharge cycles is better suppressed in a negative electrode material in which the crystallite size of the solid phase A is maintained in the range of at least 5 nm and at most 100 nm after the heat treatment, than in a negative electrode material in which the crystallite size of the solid phase A exceeds 100 nm due to the heat treatment.

That is, a negative electrode material in which deterioration due to charge/discharge cycles is suppressed can be identified by performing the above-described heat treatment. However, such a heat treatment is not necessarily required for the method for producing a negative electrode material. For example, the above-described identification may be performed by collecting a part of the produced negative electrode material and heat treating it, and it may be decided whether to use the rest of the negative electrode material, which is not heat-treated, for an actual battery according to the result of the identification. However, the heat-treated negative electrode material also can be used as it is for the below-described non-aqueous electrolyte secondary battery of the present invention, as long as the solid phase A is in at least one state selected from the group consisting of an amorphous state and a low crystalline state, or in a state in which the crystallite size is in the range of at least 5 nm and at most 100 nm.

It should be noted that the solid phase A may contain a trace amount (e.g., at most 5 wt% of the solid phase A) of an element other than Sn, Si and Zn, such as O, C, N, S, Ca, Mg, Al, Fe, W, V, Ti, Cu, Cr, Co and P.

In the following, the control of the solid phase B is described.

In the negative electrode material of the present invention, the solid phase B may contain a crystal structure represented by a space group differing from the one representing the crystal structure of the solid phase A (hereinafter, also referred to as "crystal structure B"), in the case where the solid phase A contains a crystal structure. It is also possible to provide a negative electrode material in which deterioration due to charge/discharge cycles is better suppressed, by including such a solid phase B. It should be noted that the control of the solid phase B may be performed at the same time of performing the control of the solid phase A described above, if possible.

When the solid phase A has high crystallinity and a large region as with the case of the conventional negative electrode material disclosed in JP2000-030703A, countless instances of particle cracking may occur in the negative electrode material due to absorption of Li, as described above. In this case, the cracking tends to occur in the direction of a particular crystal plane of the solid phase A. For example, when the solid phase A is made of Si, the (110) plane in terms of Miller indices is easier to cleave (i.e., easier to crack) than the (100) plane. In addition, the solid phase A is surrounded by the solid phase B. Accordingly, it is possible to restrain the particle cracking of the solid phase A by controlling the crystal structure of the solid phase B, thereby obtaining a negative electrode material in which deterioration due to charge/discharge cycles is suppressed. In addition, it is believed that the elastic modulus of the solid phase B, for example, can be controlled by controlling the crystal structure of the solid phase B.

The crystal structure B may be any crystal structure, as long as it is different from the crystal structure of the solid phase A.

The ratio of the crystal structure B in the solid phase B may be in the range of, for example, at least 60 wt% and at most 95 wt%. In particular, when it is in the range of at least 70 wt% and at most 90 wt%, particle cracking in the negative electrode material especially can be suppressed, thereby providing a negative electrode material in which deterioration due to charge/discharge cycles is better suppressed.

The crystal structure B may contain a crystal structure represented by at least one selected from the group consisting of space group C and space group F. A unit cell plane in which atoms are arranged in the center is present in a crystal structure represented by space group C and space group F. Therefore, it is believed that such a crystal structure is the most suitable for the solid phase B to ease the fluctuation in its volume, while maintaining its crystal structure against the fluctuation in the volume of the solid phase A due to Li absorption and desorption. It should be noted that space group C and space group F are space groups in Bravais lattice notation, and refer to a base-centered lattice and a face-centered lattice, respectively.

It is particularly preferable that the crystal structure B contains a crystal structure represented by space group C. In the case of a base-centered lattice, it is considered that the crystal structure can be maintained on the base and that changes in pressure due to a volume expansion of the solid phase A effectively can be absorbed in the unit cell plane having a structure comparable to that of a simple lattice. Furthermore, among space groups C, the space group Cmcm as annotated by Hermann-Mauguin symbols is more preferable. The space group can be determined by X-ray diffraction measurement (XRD). The above-described space group Cmcm includes those in which the diffraction line obtained by XRD is shifted from a value of $2\theta$ representing the space group Cmcm to the higher angle side or the lower angle side. Additionally, the shift amount depends on the value of $2\theta$, and is about $1°$ near $2\theta = 41°$, and about $2°$ near $2\theta = 65°$.

When the crystal structure B is a simple lattice (space group P in the Bravais lattice notation), it is also possible to provide a negative electrode material in which deterioration due to charge/discharge cycles is suppressed. However, as compared with the case where the crystal structure B is a base-centered lattice or a face-centered lattice, it is slightly more likely that a lattice defect is formed in the crystal structure B by the fluctuation in the volume of the solid phase A. If a lattice defect is formed in the crystal structure B, there is a possibility of inducing a decrease in the electronic conductivity.

Similarly, when the crystal structure B is a body-centered lattice (space group I in Bravais lattice notation), it is possible to provide a negative electrode material in which deterioration due to charge/discharge cycles is suppressed. However, since all of the crystal planes in the unit cell have atoms at the center of the planes, the capacity to absorb the change in pressure due to the volume expansion is slightly smaller than that of a base-centered lattice or a face-centered lattice, although the retention of the crystal structure is most excellent.

In the negative electrode material of the present invention, the weight ratio of the solid phase A in the negative electrode material may be in the range of, for example, at least 5 wt% and at most 40 wt%, and the weight ratio of the solid phase B may be in the range of, for example, at most 95 wt% and at least 60 wt%. By using this range, it is possible to provide a negative electrode material in which deterioration due to charge/discharge cycles is better suppressed. When the weight ratio of the solid phase A is more than 40 wt% (the weight ratio of the solid phase B is less than 60 wt%), the region occupied by the solid phase A in a single particle becomes large, increasing the possibility of particle cracking. Conversely, when the weight ratio of the solid phase A is less than 5 wt% (the weight ratio of the solid phase B is more than 95 wt%), there is a possibility of a decrease in capacity due to a decreased amount of the solid phase A reacting with Li, although the possibility of particle cracking is decreased.

It is particularly preferable that the weight ratio of the solid phase A is in the range of at least 10 wt% and at most 30 wt%, and the weight ratio of the solid phase B is in the range of at most 90 wt% and at least 70 wt%.

In order to achieve a higher capacity for batteries, silicon, which has a high theoretical lithium absorbing capacity, may be contained as a constituting element of the solid phase A. Titanium (Ti) also may be contained together with silicon. This is because titanium can bond with lithium and is easier to bond with oxygen than silicon, thereby making it possible to inhibit impurity oxygen from bonding with silicon (the bonding between oxygen and silicon is irreversible).

Further, the solid phase B may contain a $TiSi_2$ compound, which has a higher electronic conductivity. The conductivity of a $TiSi_2$ compound is of the order of $10^4$ S/cm. This is an electronic conductivity much higher than the order of $10^{-5}$ to $10^{-2}$ S/cm, which is the conductivity of silicon as a simple substance, and is at the same level as the conductivity of titanium.

The crystal structure of $TiSi_2$ may contain a structure represented by at least one selected from the group consisting of the space group Cmcm and the space group Fddd as annotated by Hermann-Mauguin symbols. It is particularly preferable that the crystal structure of $TiSi_2$ is made of the space group Cmcm. Additionally, the crystal structure of $TiSi_2$ does not necessarily have to correspond to the above-described space groups completely, and may be a similar crystal structure.

Further, when the solid phase B contains a region including amorphous Ti and Si, the strength of the solid phase B is improved further and particle cracking can be suppressed more effectively.

It should be noted that the solid phase B may contain a trace amount (e.g., at most 5 wt% of the solid phase B) of, for example, an element such as O, N, S and P, in addition to at least one element selected from the group consisting of Sn, Si, Zn, Group IIA elements, transition elements, Group IIB elements, Group IIIB elements and Group IVB elements.

*Embodiment 2*

Next, a method for producing a negative electrode material for a non-aqueous electrolyte secondary battery according to the present invention is described.

There is no particular limitation on the method for producing the negative electrode material according to the present invention, as long as it can realize the above-described control of the solid phase A and/or the solid phase B. For example, the size and condition of the solid phase A readily can be controlled by using mechanical alloying (a mechanical alloying process) during the production steps of the negative electrode material.

For example, it is possible to use a method that includes a first step of mixing a material containing at least one element selected from the group consisting of silicon, tin and zinc with a material containing at least one element selected from the group consisting of Group IIA elements, transition elements, Group IIB elements, Group IIIB elements and Group IVB elements, and melting the resulting material; a second step of forming a solidified material by quenching and solidifying the melted material; and a third step of obtaining a powder including a solid phase A and a solid phase B that have different compositions and having a structure in which a surface around the solid phase Ais entirely or partly covered by the solid phase B, by performing a mechanical alloying process on the solidified material.

There is no particular limitation on the melting method in the first step, as long as the temperature at which the mixed materials are completely melted can be maintained.

As the quenching method in the second step, for example, rapid solidification may be used. There is no particular limitation on the rapid solidification, as long as it includes a heat treatment step of rapidly solidifying the materials during the process. For example, it is possible to use roll spinning, melt drag, a direct casting and rolling process, in-rotating-liquid-spinning, spray forming, gas atomization, wet atomization, splat cooling, ribbon grinding by rapid solidification, gas atomization and splatting, melt extraction, melt spinning or a rotating electrode process.

There is no particular limitation on the raw materials for the negative electrode material with regard to the shape and the like, as long as they can achieve a component ratio required for a negative electrode material. It is possible to use, for example, a material in which the elements as simple substances constituting the negative electrode material are mixed at the desired component ratio, or an alloy, a solid solution, an intermetallic compound or the like, each having the desired component ratio.

For instance, the negative electrode material of the present invention can be obtained by combining the use of the above-described raw materials with the above-described synthesizing method.

*Embodiment 3*

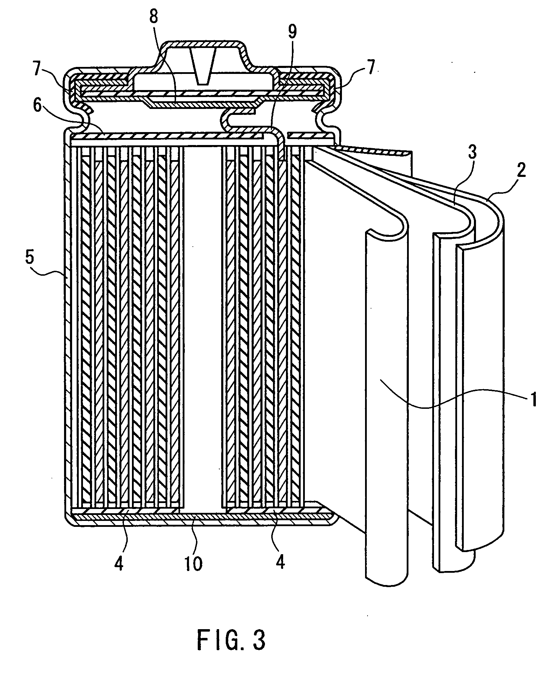

In the following, a non-aqueous electrolyte secondary battery according to the present invention is described with reference to FIG. 3.

FIG. 3 is a diagram schematically showing an example of a non-aqueous electrolyte secondary battery according to the present invention.

The non-aqueous electrolyte secondary battery shown in FIG. 3 can be obtained, for example, in the following manner. First, a positive electrode 1 and a negative electrode 2 that reversibly absorb and desorb lithium ions are laminated with a separator 3 interposed therebetween, and the obtained laminated body is rolled up. The rolled-up laminated body is placed in a case 5 that is provided with a lower insulating plate 4 at the bottom, and the whole is filled with an electrolyte having lithium ion conductivity, followed by placing an upper insulating plate 6. Thereafter, the resultant structure may be sealed by a sealing plate 8 having a gasket 7 on its periphery. The positive electrode 1 and the negative electrode 2 may be electrically connected to the external terminals of the non-aqueous electrolyte secondary battery, via a positive electrode lead 9 and a negative electrode lead 10, respectively.

By using a negative electrode including the above-described negative electrode material of the present invention as the negative electrode 2 at this time, it is possible to provide a non-aqueous electrolyte secondary battery having excellent charge/discharge cycle characteristics.

Next, a negative electrode including the negative electrode material of the present invention is described.

There is no particular limitation on the negative electrode with regard to the structure; for example, it may have a commonly used structure. Such a negative electrode can be produced by, for example, applying an electrode mixture containing the negative electrode material of the present invention, a conductive agent, a binder and the like, onto the surface of a negative electrode current collector. Any other production method may be employed, as long as the negative electrode material of the present invention is used as the negative electrode material.

There is no particular limitation on the conductive agent used for the negative electrode, as long as it is a material having electronic conductivity. Examples include: graphites such as natural graphite (e.g., flake graphite), artificial graphite and expanded graphite; carbon blacks such as acetylene black, ketjen black, channel black, furnace black, lamp black and thermal black; conductive fibers such as carbon fiber and metal fiber; metal powders such as copper powder; and organic conductive materials such as polyphenylene derivatives. Among them, it is preferable to use artificial graphite, acetylene black and carbon fiber. These materials also may be used as a mixture. Additionally, the negative electrode material may be surface-coated with these materials mechanically.

There is no particular limitation on the amount of the conductive agent to be added to the negative electrode. For example, it is in the range of 1 part by weight to 50 parts by weight to 100 parts by weight of the negative electrode material, and is preferably in the range of 1 part by weight to 30 parts by weight. Since the negative electrode material of the present invention has electronic conductivity, the battery also can fulfill its function even when no conductive agent is added thereto.

As the binder used for the negative electrode, either a thermoplastic resin or a thermosetting resin may be used, as long as it can maintain a condition in which the electrode mixture is bonded onto the current collector when the battery is constructed. Examples include: polyethylene, polypropylene, polytetrafluoroethylene (PTFE), polyvinylidene fluoride (PVDF), styrene-butadiene rubber, a tetrafluoroethylene-hexafluoroethylene copolymer, a tetrafluoroethylene-hexafluoropropylene copolymer (FEP), a tetrafluoroethylene-perfluoroalkylvinylether copolymer (PFA), a vinylidene fluoride-hexafluoropropylene copolymer, a vinylidene fluoride-chlorotrifluoroethylene copolymer, an ethylene'tetrafluoroethylene copolymer (ETFE), polychlorotrifluoroethylene (PCTFE), a vinylidene fluoride-pentafluoropropylene copolymer, a propylene-tetrafluoroethylene copolymer, an ethylene-chlorotrifluoroethylene copolymer (ECTFE), a vinylidene fluoride-hexafluoropropylene-tetrafluoroethylene copolymer, a vinylidene fluoride-perfluoromethylvinylether-tetrafluoroethylene copolymer, an ethylene-acrylic acid copolymer, a $Na^+$ ion-crosslinked copolymer of an ethylene-acrylic acid copolymer, an ethylene-methacrylic acid copolymer, a $Na^+$ ion-crosslinked copolymer of an ethylene-methacrylic acid copolymer, an ethylene-methyl acrylate copolymer, a $Na^+$ ion-crosslinked copolymer of an ethylene-methyl acrylate copolymer, an ethylene-methyl methacrylate copolymer and a $Na^+$ ion-crosslinked copolymer of an ethylene-methyl methacrylate copolymer. The above-described materials also may be used as a mixture. Among them, it is particularly preferable to use styrene-butadiene rubber, polyvinylidene fluoride, an ethylene-acrylic acid copolymer, a $Na^+$ ion-crosslinked copolymer of an ethylene-acrylic acid copolymer, an ethylene-methacrylic acid copolymer, a $Na^+$ ion-crosslinked copolymer of an ethylene-methacrylic acid copolymer, an ethylene-methyl acrylate copolymer, a $Na^+$ ion-crosslinked copolymer of an ethylene-methyl acrylate copolymer, an ethylene-methyl methacrylate copolymer or a $Na^+$ ion-crosslinked copolymer of an ethylene-methyl methacrylate copolymer.

There is no particular limitation on the current collector used for the negative electrode, as long as it is a material that has electronic conductivity and does not cause any chemical reaction inside the battery. Examples include stainless steel, nickel, copper, copper alloy, titanium, carbon, a conductive resin, or copper and stainless steel that are surface-treated with carbon, nickel or titanium. Of them, copper and a copper alloy are particularly preferable. The surfaces of these materials also may be oxidized. In addition, a surface roughness may be provided for the current collector by surface treatment or the like. The current collector may be in the form of, for example, foil, film, sheet, net, punched material, lath material, porous material, foamed material or molded fiber material. There is no particular limitation on the thickness of the current collector, and it may be in the range of about 1 μm to 500 μm, for example.

Any commonly used methods may be used for the production of an electrode mixture using the negative electrode material of the present invention, a conductive agent, a binder and the like, and for the application of the produced electrode mixture onto a current collector.

Next, the positive electrode is described.

There is no particular limitation on the positive electrode with regard to the structure and the like, as long as it includes a positive electrode material (positive electrode active material) capable of reversibly absorbing and desorbing lithium ions. Any commonly used positive electrode may be used. Such a positive electrode can be produced by, for example, applying an electrode mixture containing a positive electrode material (positive electrode active material) capable of reversibly absorbing and desorbing lithium ions, a conductive agent, a binder and the like, onto the surface of a positive electrode current collector.

There is no particular limitation on the positive electrode active material, as long as it is capable of reversibly absorbing and desorbing lithium ions. For example, lithium-containing metal oxides may be used. Examples of lithium-containing metal oxides include metal oxides represented by the composition formulas: $Li_xCoO_2$, $Li_xNO_2$, $Li_xMnO_2$, $Li_xCo_yNi_{1-y}O_2$, $Li_xCo_yM_{1-y}O_z$, $Li_xNi_{1-y}M_yO_z$, $Li_xMn_2O_4$ and $Li_xMn_{2-y}MyO_4$. However, in the above-described formulas, M is at least one element selected from the group consisting of Na, Mg, Sc, Y, Mn, Fe, Co, Ni, Cu, Zn, Al, Cr, Pb, Sb and B, and x, y and z are numerical values adjusted within the range of $0 \leqq x \leqq 1.2$, $0 \leqq y \leqq 0.9$, $2.0 \leqq z \leqq 2.3$. In addition, the above value of x (i.e., the value reflecting the composition of Li in the above-described formulas) is a value before incorporating the positive electrode active material into a secondary battery and starting charge/discharge, and it increases and decreases during charge/discharge of the battery.

Other than these metal oxides, for example, transition metal chalcogenides, vanadium oxides and their compounds with lithium, niobium oxides and their compounds with lithium, conjugated polymers made of a organic conductive material, Chevrel phase compounds and the like also may be used as the positive electrode active material. A plurality of the above-described positive electrode active materials also may be used as mixture. There is no particular limitation on the average particle size of the positive electrode active material, and it is in the range of 1 μm to 30 μm, for example.

There is no particular limitation on the conductive agent used for the positive electrode, as long as it is a material that has electronic conductivity and does not cause any chemical reaction within an electric potential region of the positive electrode active material. Examples include: graphites such as natural graphite (e.g., flake graphite) and artificial graphite; carbon blacks such as acetylene black, ketjen black, channel black, furnace black, lamp black and thermal black; conductive fibers such as carbon fiber and metal fiber; metal powders such as carbon fluoride powder and aluminum powder; conductive whiskers such as zinc oxide and potassium titanate; conductive metal oxides such as titanium oxide; and organic conductive materials such as polyphenylene derivatives. These also may be used as a mixture. Among them, it is prefer able to use artificial graphite or acetylene black. There is no particular limitation on the amount of the conductive agent to be added. For example, it may be in the range of 1 part by weight to 50 parts by weight per 100 parts by weight of the positive electrode active material, and is preferably in the range of 1 part by weight to 30 parts by weight. In the case of using carbon blacks and graphites, the amount may be in the range of 2 parts by weight to 15 parts by weight, for example.

As the conductive agent used for the positive electrode, either a thermoplastic resin or a thermosetting resin may be used, as long as it can maintain a condition in which the electrode mixture is bonded to the current collector, when the battery is constructed. For example, a resin similar to the above-described binders used for the negative electrode may be used. Among them, it is preferable to use polyvinylidene fluoride (PVDF) or polytetrafluoroethylene (PTFE).

There is no particular limitation on the current collector used for the positive electrode, as long as it is a material that has electronic conductivity and does not cause any chemical reaction within an electric potential region of the positive electrode active material. Examples include stainless steel, aluminum, aluminum alloy, titanium, carbon, a conductive resin, and stainless steel that is surface-treated with carbon or titanium. Of them, aluminum and an aluminum alloy are preferable. The surfaces of these materials also may be oxidized. In addition, a surface roughness may be provided for the current collector by surface treatment or the like. The current collector may be in the form of, for example, foil, film, sheet, net, punched metal, lath material, porous material, foamed material, molded fiber material or molded material of nonwoven fabric. There is no particular limitation on the thickness of the current collector, and it may be in the range of about 1 $\mu$m to 500 $\mu$m, for example.

Any commonly used methods may be used for the production of an electrode mixture using a positive electrode material, a conductive agent, a binder and the like, and for the application of the produced electrode mixture onto a current collector.

Other than the above-described conductive agent and binder, various additives such as a filler, a dispersion medium, an ionic conductor and a pressure increasing agent may be added, as needed, to the electrode mixtures used for the positive electrode and the negative electrode.

For example, there is no particular limitation on the filler, as long as it is a fibrous material that does not cause any chemical reaction inside the battery. Examples include olefin-based polymers such as polypropylene and polyethylene, and fibers such as glass fiber and carbon fiber. There is no particular limitation on the amount of the filler to be added, and it is at most 30 parts by weight to 100 parts by weight of the electrode mixture, for example.

In addition, it is preferable that the surface of the positive electrode mixture and that of the negative electrode mixture face each other with a separator interposed therebetween, when incorporating the positive electrode and the negative electrode into a battery.

Next, a non-aqueous electrolyte and a separator used for the non-aqueous electrolyte secondary battery of the present invention are described.

There is no particular limitation on the non-aqueous electrolyte, as long as it is electrically insulating and has lithium ion conductivity. For example, it is possible to use a non-aqueous electrolyte made of a non-aqueous solvent and a lithium salt dissolved in the solvent.

Examples of the non-aqueous solvent used in this case include: cyclic carbonates such as ethylene carbonate (EC), propylene carbonate (PC), butylene carbonate (BC) and vinylene carbonate (VC); acyclic carbonates such as dimethyl carbonate (DMC), diethyl carbonate (DEC), ethyl methyl carbonate (EMC) and dipropyl carbonate (DPC); aliphatic carboxylic acid esters such as methyl formate, methyl acetate, methyl propionate and ethyl propionate; $\gamma$-lactones such as $\gamma$-butyrolactone; acyclic ethers such as 1,2-dimethoxyethane (DME), 1,2-diethoxyethane (DEE) and ethoxymethoxyethane (EME); cyclic ethers such as tetrahydrofuran and 2-methyltetrahydrofuran; and aprotic organic solvents such as dimethyl sulfoxide, 1,3-dioxolane, formamide, acetamide, dimethylformamide, dioxolane, acetonitrile, propylnitrile, nitromethane, ethyl monoglyme, phosphoric acid triesters, trimethoxymethane, dioxolane derivatives, sulfolane, methylsulfolane, 1,3-dimethyl-2-imidazolidinone, 3-methyl-2-oxazolidinone, propylene carbonate derivatives, tetrahydrofuran derivatives, ethyl ether, 1,3-propanesultone, anisole, dimethyl sulfoxide and N-methylpyrrolidone. These may be used as a mixture. Among them, mixed solvents of cyclic carbonates and acyclic carbonates (e.g., a mixed solvent of ethylene carbonate and ethyl methyl carbonate) and mixed solvents of cyclic carbonates, acyclic carbonates and aliphatic carboxylic acid esters are preferable.

As the lithium salt to be dissolved in these solvents, it is possible to use, for example, $LiClO_4$, $LiBF_4$, $LiPF_6$, $LiAlCl_4$, $LiSbF_6$, LiSCN, LiCl, $LiCF_3SO_3$, $LiCF_3CO_2$, $Li(CF_3SO_2)_2$, $LiAsF_6$, $LiN(CF_3SO_2)_2$, $LiB_{10}Cl_{10}$, lithium lower aliphatic carboxylate, LiCl, LiBr, LiI, chloroboran lithium, 4-phenyl lithium borate and imides. The above-described lithium salts may be used as a mixture. It is particularly preferable to use $LiPF_6$.

The amount of the non-aqueous electrolyte to be added to the battery may be adjusted in accordance with, for example, the amount of the positive electrode material, the amount of the negative electrode material and the size of the battery. There is no particular limitation on the amount of the lithium salt to be dissolved in the non-aqueous solvent. For example, it may be in the range of about 0.2 mol/L to 2 mol/L, and is preferably in the range of about 0.5 mol/L to 1.5 mol/L.

In addition, solid electrolytes as listed below may be used as the non-aqueous electrolyte. The solid electrolytes may be inorganic solid electrolytes or organic solid electrolytes. As the inorganic solid electrolytes, for example, nitrides, halides and oxoacid salts of Li may be used. Examples include $Li_4SiO_4$, $Li_4SiO_4$-LiI-LiOH, $pLi_3PO_4$-$(1-p)Li_4SiO_4$ (where, p is a value in the range of 0 < p < 1), $Li_2SiS_3$, $Li_3PO_4$-$Li_2S$-$SiS_2$ and phosphorus sulfide compounds. As the organic solid electrolytes, it is possible to use, for example, polymer materials such as polyethylene oxides, polypropylene oxides, polyphosphazene, polyaziridine, polyethylene sulfides, polyvinyl alcohol, polyvinylidene fluorides, polyhexafluoropropylene and their derivatives, mixtures and complexes.

Further, other compounds may be added into the solid electrolytes, in order to improve the discharge characteristics and charge/discharge cycle characteristics of the battery further. Examples include triethyl phosphate, triethanolamine, cyclic ethers, ethylenediamine, n-glyme, pyridine, triamide hexaphosphate, nitrobenzene derivatives, crown ethers, quaternary ammonium salt and ethylene glycol dialkyl ether.

There is no particular limitation on the separator, as long as it is an electrically insulating thin film with a predetermined mechanical strength that has high lithium ion permeability and is resistant to corrosion inside the battery. For example, it is possible to use microporous thin films having the above-described properties, which are commonly used for non-aqueous electrolyte secondary batteries. It is also possible to use a separator having a function in which its pores close to increase the electrical resistance when the battery has exceeded a predetermined temperature owing to a short circuit and the like.

Examples include: olefin-based polymers containing at least one resin selected from the group consisting of polypropylene and polyethylene; and may be in the form of sheets, nonwoven fabric or fabric made of glass fiber. There is no particular limitation on the thickness of the separator, and it is in the range of 10 μm to 300 μm, for example. It is preferable that the average pore size of the separator is in a range in which the positive and negative electrode materials, binder, conductive agent and the like that are separated from the electrode sheets do not permeate the pores of the separator. For example, it is in the range of 0.01 μm to 1 μm. The average porosity of the separator may be determined depending on, for example, the electrical insulation and lithium ion permeability of the materials constituting the separator and the thickness of the separator, and it is in the range of 30 vol% to 80 vol%, for example.

Other than the structure of the battery shown in FIG. 3, the non-aqueous electrolyte secondary battery of the present invention can have a structure formed by including, in a positive electrode mixture and a negative electrode mixture, a polymer material in which a non-aqueous electrolyte made of a non-aqueous solvent and a lithium salt is absorbed and retained, and integrating a porous separator made of the above-described polymer material with the above-described positive electrode and negative electrode into one body. There is no particular limitation on the above-described polymer material, as long as it has electrical insulation and is capable of absorbing and retaining a non-aqueous electrolyte. For example, a copolymer of vinylidene fluoride and hexafluoropropylene may be used.

It should be noted that the non-aqueous electrolyte secondary battery according to the present invention is not limited to the cylindrical type shown in FIG. 3. It may have any form such as a coin shape, button shape, sheet shape, and it may be laminated, flat, square or of a large type as used for electric cars and the like.

*Examples*

Hereinafter, the present invention is described in further detail according to examples. However, the present invention is not limited to the following examples.

First, the method for evaluating negative electrode materials in the following examples is described. The same evaluation method was used for all of the examples, unless otherwise described.

The state of the solid phase A in the negative electrode material was evaluated by a WAXD measurement. A WAXD measurement was performed over a range of a diffraction angle $2\theta$ of 10° to 80°, using RINT-2500 (manufactured by Rigaku Co.) as the measurement equipment and $CuK_\alpha$, radiation (wavelength $\lambda$ = 1.5405 nm) as the X-ray source.

The measurement was conducted by filling, into a sample holder, a powdered-form negative electrode material before producing a negative electrode, using the above-described measurement method that provides a sample having no orientation in any direction. At the time of performing the WAXD measurement, a sample plane on which X-rays are incident is flat and the plane coincides with the axis of rotation of a goniometer, so that the measurement error can be minimized for the diffraction angle and intensity.

When the solid phase A is in a crystalline state, the crystallite size was determined by applying the above-noted Scherrer's equation to the results of the WAXD measurement.

The compositions of the solid phase A and the solid phase B in the negative electrode material were evaluated by EDX (EDS).

The crystal structures of the solid phase A and the solid phase B were determined by analyzing the diffraction lines obtained by the WAXD measurement.

Whether any amorphous Ti and Si is present in the solid phase B was evaluated by Raman spectroscopy measurement. For example, when amorphous Ti-Si is present, a Raman band is detected near a Raman shift of 460 m$^{-1}$. As the measurement equipment for Raman spectroscopy, a Ramanor T-64000 (Jobin Yvon/Atago Bussan Co., LTD.) was used. The measurement was conducted under a nitrogen gas atmosphere in such a manner that laser spots are not concentrated at a single place. In addition, an Ar$^+$ laser (output of 50 mW and 100 mW) was used as a laser light source with a beam spot diameter of about 200 μm, and the laser light was placed in a 180° scattering arrangement (back-scattering mode).

After evaluating the compositions, crystal structures and the like of the solid phase A and the solid phase B in the negative electrode material in this manner, a non-aqueous electrolyte secondary battery was actually produced, and the battery characteristics (initial battery capacity and capacity retention rate) were evaluated.

A negative electrode was produced as follows. To 75 parts by weight of each of the negative electrode materials produced in the examples, 20 parts by weight of acetylene black (AB) as a conductive agent and 5 parts by weight of a polyvinylidene fluoride resin as a binder were mixed. This mixture was dispersed in N-methyl-2-pyrrolidone (NMP) to form a slurry, which was applied onto a negative electrode current collector made of a copper foil (thickness: 14 μm) in a thickness of 100 μm, dried and then rolled, thereby obtaining a negative electrode.

Apositive electrode was produced as follows. To 85 parts by weight of lithium cobaltate powder, 10 parts by weight of AB as a conductive agent and 5 parts by weight of a polyvinylidene fluoride resin as a binder were mixed. This mixture was dispersed in dehydrated N-methyl-pyrrolidinone to form a slurry, which was applied onto a positive electrode current collector made of an aluminum foil (thickness: 20 μm) in a thickness of 150 μm, dried and then rolled, thereby obtaining a positive electrode.

The negative electrode and positive electrode prepared as above, a microporous separator made of polyethylene, and a non-aqueous electrolyte in which a 1.5 mol/L concentration of LiPF$_6$ is dissolved in a mixed solvent of ethylene carbonate and ethyl methyl carbonate (volume ratio: 1:1) were used to produce a cylindrical non-aqueous electrolyte secondary battery as shown in FIG. 3. This battery had a diameter of 18 mm and a height of 650 mm.

The capacity and charge/discharge cycle characteristics of the battery were evaluated as follows.

In a constant temperature bath at 20°C, a charge/discharge cycle was performed repeatedly, in which the battery was charged with a constant current of 1000 mA until the battery voltage reached 4.2 V, and then discharged with a constant current of 1000 mA until the battery voltage dropped to 2.0 V The above-described charge/discharge cycle was performed 100 times. The discharge capacity at the 2nd cycle was taken as the initial discharge capacity of the battery, and the ratio of the discharge capacity at the 100th cycle to the initial discharge capacity was calculated to obtain the capacity retention rate of the battery.

*Example 1*

The negative electrode materials produced in this example are shown in the following TABLE 1.

TABLE 1

| sample No. | solid phase A composition | solid phase A weight ratio (%) | solid phase B composition | solid phase B weight ratio (%) | synthesizing time (Hr) |
|---|---|---|---|---|---|
| A1 | Sn | 20 | Ti$_6$Sn$_5$ | 80 | 3 |
| A2 | Sn | 20 | Ti$_6$Sn$_5$ | 80 | 10 |
| A3 | Sn | 20 | Ti$_6$Sn$_5$ | 80 | 20 |
| A4 | Sn | 20 | Ti$_6$Sn$_5$ | 80 | 30 |
| A5 | Sn | 20 | Ti$_6$Sn$_5$ | 80 | 50 |
| A6 | Sn | 25 | Ti-Sn solid solution | 75 | 3 |
| A7 | Sn | 25 | Ti-Sn solid solution | 75 | 10 |
| A8 | Sn | 25 | Ti-Sn solid solution | 75 | 20 |
| A9 | Sn | 25 | Ti-Sn solid solution | 75 | 50 |
| B1 | Si | 25 | CoSi$_2$ | 75 | 3 |

TABLE 1   (continued)

| sample No. | solid phase A composition | solid phase A weight ratio (%) | solid phase B composition | solid phase B weight ratio (%) | synthesizing time (Hr) |
|---|---|---|---|---|---|
| B2 | Si | 25 | $CoSi_2$ | 75 | 10 |
| B3 | Si | 25 | $CoSi_2$ | 75 | 20 |
| B4 | Si | 25 | $CoSi_2$ | 75 | 30 |
| B5 | Si | 30 | Co-Si solid solution | 70 | 3 |
| B6 | Si | 30 | Co-Si solid solution | 70 | 10 |
| B7 | Si | 30 | Co-Si solid solution | 70 | 20 |
| B8 | Si | 30 | Co-Si solid solution | 70 | 30 |
| B9 | Si | 30 | Co-Si solid solution | 70 | 50 |
| C1 | Zn | 10 | $VZn_{16}$ | 90 | 3 |
| C2 | Zn | 10 | $VZn_{16}$ | 90 | 10 |
| C3 | Zn | 10 | $VZn_{16}$ | 90 | 20 |
| C4 | Zn | 10 | $VZn_{16}$ | 90 | 30 |
| C5 | Zn | 10 | $VZn_{16}$ | 90 | 50 |
| C6 | Zn | 40 | Cu-Zn solid solution | 60 | 3 |
| C7 | Zn | 40 | Cu-Zn solid solution | 60 | 10 |
| C8 | Zn | 40 | Cu-Zn solid solution | 60 | 20 |
| C9 | Zn | 40 | Cu-Zn solid solution | 60 | 50 |

Here, the production method of sample A1 is shown as an example. A mixture of Sn and Ti was melted at 1600°C such that the solid phase A made of Sn constituted 20 parts by weight of the negative electrode material and the solid phase B made of $Ti_6Sn_5$ constituted 80 parts by weight of the negative electrode material, and the melted material was quenched by a roll quenching process and solidified. The obtained solidified material was charged into a container for ball milling, and then placed in a planetary ball mill, followed by a mechanical alloying process at a rotation speed of 2800 rpm. The synthesizing time for the mechanical alloying process was three hours. The obtained powder was sieved into particles having an average size of at most 45 μm, thereby producing a negative electrode material A1.

Also the other samples were produced such that the solid phase A and the solid phase B had the respective compositions and weight ratios listed in TABLE 1, in the same manner as the sample A1. Although each of the groups of samples A1 to A5 and samples A6 to A9 has the same composition and the same weight ratio, the synthesizing time for the mechanical alloying process varies among the samples in each group.

The evaluation of the solid phase A by the above-described WAXD measurement and the evaluation of the battery characteristics were performed on samples A1 to A9, samples B1 to B9 and samples C1 to C9, which were produced in the above-described manner. In addition, a battery using graphite for the negative electrode material was produced as a conventional example (identical to the samples of the example, except for the negative electrode material) and the evaluation of the battery characteristics was similarly performed. The results are shown in the following TABLE 2.

TABLE 2

| sample No. | solid phase A composition | solid phase B composition | peak attributed to crystal plane of solid phase A | crystallite size of solid phase A (after heat treatment) (nm) | initial discharge capacity (mAh) | capacity retention rate (%) |
|---|---|---|---|---|---|---|
| A1 | Sn | $Ti_6Sn_5$ | present | - | 1905 | 49 |
| A2 | Sn | $Ti_6Sn_5$ | absent | 110 | 1950 | 90 |
| A3 | Sn | $Ti_6Sn_5$ | absent | 100 | 2260 | 91 |
| A4 | Sn | $Ti_6Sn_5$ | absent | 5 | 2245 | 91 |
| A5 | Sn | $Ti_6Sn_5$ | absent | 1 | 1750 | 90 |
| A6 | Sn | Ti-Sn solid solution | present | - | 1990 | 45 |
| A7 | Sn | Ti-Sn solid solution | absent | 90 | 2225 | 91 |
| A8 | Sn | Ti-Sn solid solution | absent | 10 | 2200 | 90 |
| A9 | Sn | Ti-Sn solid solution | absent | 2 | 1690 | 90 |
| B1 | Si | $CoSi_2$ | present | - | 1910 | 50 |
| B2 | Si | $CoSi_2$ | absent | 100 | 2360 | 92 |
| B3 | Si | $CoSi_2$ | absent | 5 | 2345 | 90 |
| B4 | Si | $CoSi_2$ | absent | 1 | 1450 | 91 |
| B5 | Si | Co-Si Solid solution | present | - | 1870 | 39 |
| B6 | Si | Co-Si solid solution | absent | 110 | 1950 | 91 |
| B7 | Si | Co-Si solid solution | absent | 90 | 2320 | 92 |
| B8 | Si | Co-Si solid solution | absent | 10 | 2302 | 90 |
| B9 | Si | Co-Si solid solution | absent | 2 | 1570 | 90 |
| C1 | Zn | $VZn_{16}$ | present | - | 1685 | 49 |
| C2 | Zn | $VZn_{16}$ | absent | 110 | 1925 | 90 |
| C3 | Zn | $VZn_{16}$ | absent | 100 | 2166 | 91 |
| C4 | Zn | $VZn_{16}$ | absent | 5 | 2145 | 92 |
| C5 | Zn | $VZn_{16}$ | absent | 1 | 1620 | 91 |
| C6 | Zn | Cu-Zn solid solution | present | - | 1990 | 44 |
| C7 | Zn | Cu-Zn solid solution | absent | 90 | 2135 | 91 |

TABLE 2   (continued)

| sample No. | solid phase A composition | solid phase B composition | peak attributed to crystal plane of solid phase A | crystallite size of solid phase A (after heat treatment) (nm) | initial discharge capacity (mAh) | capacity retention rate (%) |
|---|---|---|---|---|---|---|
| C8 | Zn | Cu-Zn solid solution | absent | 10 | 2100 | 91 |
| C9 | Zn | Cu-Zn solid solution | absent | 2 | 1560 | 90 |
| graphite | - | - | - | - | 1800 | 89 |

The results of the samples A1 to A9 are described in the following. As shown in TABLE 2, from the results of the WAXD measurement performed after producing the samples A1 to A9, it can be seen that the samples A1 and A6, whose synthesizing times were short, exhibited a peak attributed to the crystal plane of the solid phase A. However, the other samples, whose synthesizing times were 10 hours or longer, exhibited no peak attributed to the crystal plane of the solid phase A.

In order to examine the difference in the material structure of the solid phase A for each of the samples that exhibited no peak (samples A2 to A5 and samples A7 to A9), a part of each of the samples was collected to perform a heat treatment (for one hour at 150°C under an inert gas atmosphere), and the WAXD measurement was conducted on the heat-treated negative electrode materials. As a result, crystals grew in the solid phase A by the heat treatment, and all of the samples exhibited a peak attributed to the crystal plane of the solid phase A. The crystallite size of the solid phase A decreased with an increase in the synthesizing time of the samples. Since the crystallite size after the heat treatment is believed to reflect the particle size before the heat treatment, it was found that the longer the synthesizing time for the mechanical alloying process, the smaller the particle size of the material constituting the obtained solid phase A is.

The samples A1 to A9 were actually incorporated into batteries (a negative electrode material that was not heat treated was used for all of the samples A1 to A9), and the battery characteristics were evaluated. As a result, as shown in TABLE 2, the samples that exhibited no peak attributed to the crystal plane of the solid phase A before the heat treatment (samples A2 to A5 and samples A7 to A9) had a capacity retention rate of 90% or more, which was higher than that of the conventional example. Moreover, the initial discharge capacities of these samples were sufficiently higher than that of the conventional example. On the other hand, in the case of the samples in which the solid phase A was crystalline from the beginning, such as the samples A1 and A6, the initial discharge capacity was higher than that of the conventional example, but the capacity retention rate was lower.

When examining the correlation between the crystallite size in the solid phase A after the heat treatment and the battery characteristics, it was found that the samples having a crystallite size in the range of 5 nm to 100 nm after the heat treatment were improved not only in the capacity retention rate, but also in the initial discharge capacity particularly significantly, providing secondary batteries with an even higher capacity and excellent charge/dischar ge characteristics.

Additionally, no difference was observed in the obtained tendencies between the samples in which the solid phase B was made of the intermetallic compound $Ti_6Sn_5$ and the samples in which the solid phase B was made of a solid solution of Ti and Sn.

For the sample A4, which was one of the samples in which the solid phase A after the heat treatment was in at least one state selected from the group consisting of an amorphous state and a low crystalline state or in which the crystallite size was in the range of 5 nm to 100 nm, the heat-treated negative electrode material was actually incorporated into a battery, and the battery characteristics were evaluated. As a result, the sample yielded an initial discharge capacity of 2240 mAh and a capacity retention rate of 90%, which were capacity and charge/discharge cycle characteristics substantially the same as those before the heat treatment, providing a high-capacity secondary battery with excellent charge/discharge characteristics.

The results of the samples B 1 to B9 and the samples C 1 to C9 also showed the same tendencies as those of the samples A1 to A9. TABLE 2 shows that the samples that exhibited no peak attributed to the crystal plane of the solid phase A before the heat treatment had a capacity retention rate of 90% or more, which was higher than that of the conventional example. These samples also yielded an initial discharge capacity sufficiently higher than that of the conventional example. On the other hand, in the case of the samples in which the solid phase A was crystalline from the beginning, such as the samples B1, B5, C1 and C6, the initial discharge capacity was higher than that of the conventional example, but the capacity retention rate was lower. For the samples B7 (the solid phase A was made of Si) and C4 (the solid phase A was made of Zn), for example, the heat-treated negative electrode material was actually incorporated into a battery, and the battery characteristics were evaluated in the same manner as the sample A4 (the solid phase A was made of Sn). As a result, the samples yielded high-capacity second batteries with excellent charge/discharge cycle characteristics having capacities and charge/discharge cycle characteristics that were substantially the same as those before the heat treatment.

When examining the correlation between the crystallite size in the solid phase A after the heat treatment and the battery characteristics, it was found that the samples having a crystallite size in the range of 5 nm to 100 nm were improved not only in the capacity retention rate, but also in the initial discharge capacity particularly significantly, realizing secondary batteries with an even higher capacity and excellent charge/discharge characteristics, as with the case of the samples A1 to A9. In particular, the initial discharge capacities of the samples B2 to B3 and B7 to B8, in each of which the solid phase A was made of Si, were improved greatly to 2300 mAh or higher.

From the above, it can be seen that a non-aqueous electrolyte secondary battery with excellent charge/discharge cycle characteristics can be provided when the solid phase A is in at least one state selected from the group consisting of an amorphous state and a low crystalline state. Particularly, it can be seen that a high-capacity non-aqueous electrolyte secondary battery with excellent charge/discharge cycle characteristics can be provided when the crystallite size in the solid phase A is in the range of 5 nm to 100 nm after the heat treatment.

It should be noted that the heat treatment for the samples B2 to B4 and the samples B6 to B9 was performed for one hour at 500°C under an inert gas atmosphere, and the heat treatment for the samples C2 to C5 and the samples C7 to C9 was performed for one hour at 200°C under an inert atmosphere. The difference in the heat treatment temperatures was due to the difference in the compositions of the solid phase A. Similarly, in the following examples, the heat treatment was performed at 150°C for the samples in which the solid phase A was made of Sn, at 500°C for the samples in which the solid phase A was made of Si, and at 200°C for the samples in which the solid phase A was made of Zn.

As for the samples B1 to B9, no difference was observed in the obtained tendencies between the samples in which the solid phase B was made of the intermetallic compound $CoSi_2$ and the samples in which the solid phase B was made of a solid solution of Co and Si. Similarly, as for the samples C1 to C9, no difference due to the composition of the solid phase B was observed:

*Example 2*

The negative electrode materials produced in this example are shown in the following TABLE 3. It should be noted that the negative electrode materials were produced in the same manner as in Example 1.

TABLE 3

| sample No. | solid phase A composition | solid phase A weight ratio (%) | solid phase B composition | solid phase B weight ratio (%) | synthesizing time (Hr) |
|---|---|---|---|---|---|
| D1 | Sn | 40 | $Ti_6Sn_5$ | 60 | 100 |
| D2 | Sn | 40 | Ti-Sn solid solution | 60 | 100 |
| E1 | Si | 20 | $CoSi_2$ | 80 | 30 |
| E2 | Si | 20 | Co-Si solid solution | 80 | 30 |
| F1 | Zn | 20 | $VZn_{16}$ | 80 | 30 |
| F2 | Zn | 7 | Cu-Zn solid solution | 93 | 10 |

The evaluation of the solid phase A by the above-described WAXD measurement and the evaluation of the battery characteristics were performed on samples D1 to D2, samples E1 to E2 and samples F1 to F2, which were produced in the above-described manner. In addition, a battery using graphite for the negative electrode material was produced as a conventional example (identical to the samples of the example, except for the negative electrode material), and the evaluation of the battery characteristics was similarly performed. The results are shown in the following TABLE 4, along with the results of the samples A3, A4, A7, A8, B2, B3, B7, B8, C3, C4, C7 and C8 of Example 1 for comparison.

TABLE 4

| sample No. | solid phase A composition | solid phase B composition | peak attributed to crystal plane of solid phase A (before heat treatment) | crystallite size of solid phase A (after heat treatment) (nm) | peak attributed to crystal plane of solid phase A (after heat treatment) | initial discharge capacity (mAh) | capacity retention rate (%) |
|---|---|---|---|---|---|---|---|
| A3 | Sn | $Ti_6Sn_5$ | absent | 100 | present | 2260 | 91 |
| A4 | Sn | $Ti_6Sn_5$ | absent | 5 | present | 2245 | 90 |
| D1 | Sn | $Ti_6Sn_5$ | absent | - | absent | 2255 | 94 |
| A7 | Sn | Ti-Sn solid solution | absent | 90 | present | 2225 | 91 |
| A8 | Sn | Ti-Sn solid solution | absent | 10 | present | 2200 | 90 |
| D2 | Sn | Ti-Sn solid solution | absent | - | absent | 2225 | 93 |
| B2 | Si | $CoSi_2$ | absent | 100 | present | 2360 | 92 |
| B3 | Si | $CoSi_2$ | absent | 5 | present | 2345 | 90 |
| E1 | Si | $CoSi_2$ | absent | - | absent | 2355 | 94 |
| B7 | Si | Co-Si solid solution | absent | 90 | present | 2320 | 92 |
| B8 | Si | Co-Si solid solution | absent | 10 | present | 2302 | 90 |
| E2 | Si | Co-Si solid solution | absent | - | absent | 2300 | 93 |
| C3 | Zn | $VZn_{16}$ | absent | 100 | present | 2166 | 91 |
| C4 | Zn | $VZn_{16}$ | absent | 5 | present | 2145 | 92 |
| F1 | Zn | $VZn_{16}$ | absent | - | absent | 2149 | 94 |
| C7 | Zn | Cu-Zn solid solution | absent | 90 | present | 2135 | 91 |
| C8 | Zn | Cu-Zn solid solution | absent | 10 | present | 2100 | 91 |
| F2 | Zn | Cu-Zn solid solution | absent | - | absent | 2089 | 93 |
| graphite | - | - | - | - | - | 1800 | 89 |

The results of the samples D1 and D2 are described in the following. As shown in TABLE 4, as a result of performing the WAXD measurement after producing the samples D1 and D2, the samples exhibited no peak attributed to the crystal plane of the solid phase A.

Therefore, the same heat treatment (for one hour at 150°C under an inert gas atmosphere) as that performed on the samples A2 to A5 and A7 to A9 in Example 1 was performed on a part of each of the samples D1 and D2, and the WAXD measurement was conducted on the heat-treated samples D1 and D2. As a result, the samples exhibited no peak attributed to the crystal plane of the solid phase A, despite performing the heat treatment. It seems that the solid phase A is in an amorphous or low crystalline state, or in a state in which the two states are intermixed, even after the heat treatment.

The samples D1 and D2 that were not heat treated were actually incorporated into batteries, and the battery characteristics were evaluated. As a result, as shown in TABLE 4, both the capacity retention rates and the initial discharge capacities were improved significantly, as compared with those of the conventional example. Additionally, it is shown that the capacity retention rates, in particular, are improved further, as compared with the results of the A3, A4, A7 and A8 of Example 1.

It was also shown that whether the composition of the solid phase B was an intermetallic compound made of $Ti_6Sn_5$ or a Ti-Sn solid solution did not affect the battery characteristics greatly.

The results of the samples E1 and E2 and the samples F1 and F2 also showed the same tendencies as those of the samples D1 and D2. As shown in TABLE 4, also in the case of the samples E1 and E2 and the samples F1 and F2, no peak attributed to the crystal plane of the solid phase A was measured after the heat treatment, and the batteries incorporating the samples E1 and E2 and the samples F1 and F2 as the negative electrode materials realized high capacity and excellent charge/discharge cycle characteristics. In particular, the samples E1 and E2, in each of which the solid phase A was made of Si, yielded a high capacity of 2300 mAh or more as the initial discharge capacity. As with the above-described results, it was found that the composition of the solid phase B did not affect the battery characteristics greatly.

From these results, it was found that a non-aqueous electrolyte secondary battery having an even higher capacity and excellent charge/discharge cycle characteristics could be provided by using a negative electrode material in which the solid phase A is in at least one state selected from the group consisting of an amorphous state and a low crystalline state and the solid phase A is in at least one state selected from the group consisting of an amorphous state and a low crystalline state even after the a heat treatment.

*Example 3*

The negative electrode materials produced in this example are shown in TABLE 5. It should be noted that the negative electrode materials were produced in the same manner as in Example 1.

TABLE 5

| sample No. | solid phase A composition | solid phase A weight ratio (%) | solid phase B composition | solid phase B weight ratio (%) | synthesizing time (Hr) |
|---|---|---|---|---|---|
| G1 | Sn | 45 | $Ti_6Sn_5$ | 55 | 100 |
| G2 | Sn | 40 | $Ti_6Sn_5$ | 60 | 50 |
| G3 | Sn | 39 | $Ti_6Sn_5$ | 61 | 50 |
| G4 | Sn | 6 | Ti-Sn solid solution | 94 | 20 |
| G5 | Sn | 5 | Ti-Sn solid solution | 95 | 10 |
| G6 | Sn | 2 | Ti-Sn solid solution | 98 | 10 |
| H1 | Si | 44 | $CoSi_2$ | 56 | 50 |
| H2 | Si | 40 | $CoSi_2$ | 60 | 50 |
| H3 | Si | 30 | $CoSi_2$ | 70 | 30 |
| H4 | Si | 10 | Co-Si solid solution | 90 | 30 |
| H5 | Si | 5 | Co-Si solid solution | 95 | 15 |
| H6 | Si | 4 | Co-Si solid solution | 96 | 10 |
| 11 | Zn | 45 | $VZn_{16}$ | 55 | 20 |
| 12 | Zn | 39 | $VZn_{16}$ | 61 | 20 |

TABLE 5 (continued)

| sample No. | solid phase A composition | solid phase A weight ratio (%) | solid phase B composition | solid phase B weight ratio (%) | synthesizing time (Hr) |
|---|---|---|---|---|---|
| 13 | Zn | 20 | $VZn_{16}$ | 80 | 10 |
| 14 | Zn | 7 | Cu-Zn solid solution | 93 | 10 |
| 15 | Zn | 6 | Cu-Zn solid solution | 94 | 10 |
| 16 | Zn | 3 | Cu-Zn solid solution | 97 | 10 |

The evaluation of the solid phase A by the above-described WAXD measurement and the evaluation of the battery characteristics were performed on samples G1 to G6, samples H1 to H6 and samples I1 to I6, which were produced in the above-described manner. In addition, a battery using graphite for the negative electrode material was produced as a conventional example (identical to the samples of the example, except for the negative electrode material), and the evaluation of the battery characteristics was similarly performed. Since all of the samples exhibited no peak attributed to the crystal plane of the solid phase A in the WAXD measurement after the production of the samples, a heat treatment (for one hour under an inert gas atmosphere) was performed on the samples at temperatures varied depending on the composition of the solid phase A (samples G1 to G6: 150°C, samples H1 to H6: 500°C, samples I1 to I6: 200°C), followed by conducting the WAXD measurement again.

The results are shown in TABLES 6-1 and 6-2.

TABLE 6-1

| sample No. | solid phase A composition | solid phase B composition | peak attributed to crystal plane of solid phase A (before heat treatment) | crystallite size of solid phase A (after heat treatment) (nm) | peak attributed to crystal plane of solid phase A (after heat treatment) |
|---|---|---|---|---|---|
| G1 | Sn | $Ti_6Sn_5$ | absent | 20 | present |
| G2 | Sn | $Ti_6Sn_5$ | absent | 20 | present |
| G3 | Sn | $Ti_6Sn_5$ | absent | - | absent |
| G4 | Sn | Ti-Sn solid solution | absent | 21 | present |
| G5 | Sn | Ti-Sn solid solution | absent | - | absent |
| G6 | Sn | Ti-Sn solid solution | absent | - | absent |
| H1 | Si | $CoSi_2$ | absent | 15 | present |
| H2 | Si | $CoSi_2$ | absent | 15 | present |
| H3 | Si | $CoSi_2$ | absent | - | absent |
| H4 | Si | Co-Si solid solution | absent | 14 | present |
| H5 | Si | Co-Si solid solution | absent | - | absent |
| H6 | Si | Co-Si solid solution | absent | - | absent |
| I1 | Zn | $VZn_{16}$ | absent | 30 | present |
| I2 | Zn | $VZn_{16}$ | absent | 30 | present |

20

TABLE 6-1   (continued)

| sample No. | solid phase A composition | solid phase B composition | peak attributed to crystal plane of solid phase A (before heat treatment) | crystallite size of solid phase A (after heat treatment) (nm) | peak attributed to crystal plane of solid phase A (after heat treatment) |
|---|---|---|---|---|---|
| I3 | Zn | $VZn_{16}$ | absent | - | absent |
| I4 | Zn | Cu-Zn solid solution | absent | 40 | present |
| I5 | Zn | Cu-Zn solid solution | absent | - | absent |
| I6 | Zn | Cu-Zn solid solution | absent | - | absent |
| graphite | - | - | - | - | - |

TABLE 6-2

| sample No. | solid phase A weight ratio (wt%) | solid phase B weight ratio (wt%) | initial discharge capacity (mAh) | capacity retention rate (%) |
|---|---|---|---|---|
| G1 | 45 | 55 | 2522 | 80 |
| G2 | 40 | 60 | 2425 | 91 |
| G3 | 39 | 61 | 2410 | 90 |
| G4 | 6 | 94 | 2020 | 92 |
| G5 | 5 | 95 | 2010 | 91 |
| G6 | 2 | 98 | 1750 | 95 |
| H1 | 44 | 56 | 2550 | 81 |
| H2 | 40 | 60 | 2450 | 90 |
| H3 | 30 | 70 | 2355 | 91 |
| H4 | 10 | 90 | 2090 | 92 |
| H5 | 5 | 95 | 2005 | 92 |
| H6 | 4 | 96 | 1805 | 96 |
| I1 | 45 | 55 | 2530 | 80 |
| I2 | 39 | 61 | 2390 | 90 |
| I3 | 20 | 80 | 2220 | 90 |
| I4 | 7 | 93 | 2040 | 91 |
| I5 | 6 | 94 | 2006 | 92 |
| I6 | 3 | 97 | 1710 | 94 |
| graphite | - | - | 1800 | 89 |

As shown in TABLES 6-1 and 6-2, in each case of the samples G1 to G6, samples H1 to H6, and samples I1 to I6, the initial discharge capacity and capacity retention rate were improved compared with those of the conventional example regardless of whether any peak attributed to the crystal plane of the solid phase A was obtained after the heat treatment, when the weight ratio of the solid phase A was in the range of at least 5 wt% and at most 40 wt% (the weight ratio of the solid phase B was in the range of at least 60 wt% and at most 95 wt%). When the weight ratio of the solid phase A was less than 5 wt%, the initial discharge capacity was at the same level as that of the conventional example, but the initial discharge capacity was improved significantly. When the weight ratio of the solid phase A was more than 40 wt%, the capacity retention rate was decreased, but the initial discharge capacity was improved significantly.

Accordingly, it was found that a non-aqueous electrolyte secondary battery having an even higher capacity and excellent charge/discharge cycle characteristics could be provided when the weight ratio of the solid phase A was in the range of at least 5 wt% and at most 40 wt% (the weight ratio of the solid phase B was in the range of at least 60 wt% and at most 95 wt%).

*Example 4*

The negative electrode materials produced in this example are shown in the following TABLE 7. It should be noted that the negative electrode materials were produced in the same manner as in Example 1.

TABLE 7

| sample No. | solid phase A composition | solid phase A weight ratio (%) | solid phase B composition | solid phase B weight ratio (%) | synthesizing time (Hr) |
|---|---|---|---|---|---|
| J1 | Si | 20 | $CoSi_2$ | 80 | 20 |
| J2 | Si | 20 | $WSi_2$ | 80 | 20 |
| J3 | Si | 20 | $CuSi_2$ | 80 | 30 |
| J4 | Si | 20 | Ti-Si solid solution | 80 | 10 |
| J5 | Si | 20 | Ti-Si solid solution | 80 | 12 |
| J6 | Si | 20 | Ti-Si solid solution | 80 | 15 |
| J7 | Si | 20 | $TiSi_2$ | 80 | 20 |
| J8 | Si | 20 | $TiSi_2$ | 80 | 22 |
| J9 | Si | 20 | $TiSi_2$ | 80 | 25 |
| J10 | Si | 20 | $TiSi_2$ and amorphous Ti-Si | 80 | 30 |
| J11 | Si | 20 | $TiSi_2$ and amorphous Ti-Si | 80 | 32 |
| J12 | Si | 20 | $TiSi_2$ and amorphous Ti-Si | 80 | 35 |

The evaluation of the solid phase Aby the above-described WAXD measurement and the evaluation of the battery characteristics were performed on samples J1 to J12, which were produced in the above-described manner. In addition, a battery using graphite for the negative electrode material was produced as a conventional example (identical to the samples of the example, except for the negative electrode material), and the evaluation of the battery characteristics was similarly performed. Since all of the samples exhibited no peak attributed to the crystal plane of the solid phase A in the WAXD measurement after the production of the samples, a heat treatment (for one hour at 500°C under an inert gas atmosphere) was performed on the samples, followed by conducting the WAXD measurement again.

The results are shown in TABLES 8-1 and 8-2.

TABLE 8-1

| sample No. | solid phase A composition | solid phase B composition | peak attributed to crystal plane of solid phase A (before heat treatment) | crystallite size of solid phase A (after heat treatment) (nm) | peak attributed to crystal plane of solid phase A (after heat treatment) |
|---|---|---|---|---|---|
| J1 | Si | $CoSi_2$ | absent | 18 | present |
| J2 | Si | $WSi_2$ | absent | 20 | present |
| J3 | Si | $CuSi_2$ | absent | - | absent |

TABLE 8-1   (continued)

| sample No. | solid phase A composition | solid phase B composition | peak attributed to crystal plane of solid phase A (before heat treatment) | crystallite size of solid phase A (after heat treatment) (nm) | peak attributed to crystal plane of solid phase A (after heat treatment) |
|---|---|---|---|---|---|
| J4 | Si | Ti-Si solid solution | absent | 14 | present |
| J5 | Si | Ti-Si solid solution solution | absent | - | absent |
| J6 | Si | Ti-Si solid solution | absent | - | absent |
| J7 | Si | $TiSi_2$ | absent | 13 | present |
| J8 | Si | $TiSi_2$ | absent | 10 | present |
| J9 | Si | $TiSi_2$ | absent | - | absent |
| J10 | Si | $TiSi_2$ and amorphous Ti-Si | absent | 13 | present |
| J11 | Si | $TiSi_2$ and amorphous Ti-Si | absent | - | absent |
| J12 | Si | $TiSi_2$ and amorphous Ti-Si | absent | - | absent |
| graphite | - | - | - | - | - |

TABLE 8-2

| sample No. | solid phase A weight ratio (wt%) | solid phase B weight ratio (wt%) | initial discharge capacity (mAh) | capacity retention rate (%) |
|---|---|---|---|---|
| J1 | 20 | 80 | 2300 | 90 |
| J2 | 20 | 80 | 2295 | 90 |
| J3 | 20 | 80 | 2280 | 91 |
| J4 | 20 | 80 | 2400 | 91 |
| J5 | 20 | 80 | 2405 | 90 |
| J6 | 20 | 80 | 2419 | 91 |
| J7 | 20 | 80 | 2505 | 93 |
| J8 | 20 | 80 | 2550 | 94 |
| J9 | 20 | 80 | 2570 | 93 |
| J10 | 20 | 80 | 2515 | 95 |
| J11 | 20 | 80 | 2560 | 96 |
| J12 | 20 | 80 | 2575 | 95 |
| graphite | - | - | 1800 | 89 |

As shown in TABLES 8-1 and 8-2, the results indicated that either all of the samples exhibited no peak attributed to the crystal plane of the solid phase A after the heat treatment or the crystallite size of the solid phase A was in the range of 5 nm to 100 nm even in the case of the samples exhibiting such a peak. Thus, high-capacity non-aqueous electrolyte secondary batteries having excellent charge/discharge cycle characteristics were obtained.

Of these samples, in the case of the samples J4 to J12, in each of which the solid phase A was made of Si and the solid phase B contained Ti and Si, the initial discharge capacity was increased more.

In particular, in the case of the samples J7 to J12, in each of which the solid phase B contained $TiSi_2$, the initial discharge capacity and the capacity retention rate increased remarkably. Among them, the samples J10 to J12, in each of which the solid phase B contained $TiSi_2$ and amorphous Ti-Si exhibited the most excellent battery characteristics.

The weight ratio of the solid phase B in the negative electrode material is not particularly limited to the weight ratios shown in this example.

*Example 5*

In this example, negative electrode materials in which the solid phase A and the solid phase B have crystal structures represented by different space groups were produced by using mechanical alloying and controlling the synthesizing time as in Example 1.

The negative electrode materials produced in this example are shown in TABLE 9.

TABLE 9

| sample No. | solid phase A composition | solid phase A weight ratio (%) | solid phase B composition | solid phase B weight ratio (%) | synthesizing time (Hr) |
|---|---|---|---|---|---|
| K1 | Sn | 20 | $FeSn_2$ | 80 | 20 |
| K2 | Si | 15 | $CoSi_2$ | 85 | 20 |
| K3 | Si | 20 | $FeSi_2$ | 80 | 20 |
| K4 | Si | 20 | $WSi_2$ | 80 | 20 |
| K5 | Si | 20 | $Ca_2Si$ | 80 | 20 |
| K6 | Si | 20 | $Mg_2Si$ | 80 | 20 |
| K7 | Si | 20 | $MnSi_{1.7}$ | 80 | 20 |
| K8 | Si | 20 | $Ru_2Si_3$ | 80 | 20 |
| K9 | Si | 20 | $CrSi_2$ | 80 | 20 |
| K10 | Si | 20 | $ReSi_2$ | 80 | 20 |
| K11 | Si | 20 | $TiSi_2$ | 80 | 20 |

It should be noted that although the synthesizing time is 20 hours for all of the samples in this example, the crystal structures of the solid phase A and the solid phase B can be varied by controlling the synthesizing time.

The evaluation of the crystal structures of the solid phase A and the solid phase B by the above-described WAXD measurement and the evaluation of the battery characteristics were performed on samples K1 to K11, which were produced in the above-described manner. In addition, a battery using graphite for the negative electrode material was produced as a conventional example (identical to the samples of the example, except for the negative electrode material), and the evaluation of the battery characteristics was similarly performed. The results are shown in TABLES 10-1 and 10-2.

TABLE 10-1

| sample No. | solid phase A composition | crystal structure of solid phase A (in Bravais lattice notation) |
|---|---|---|
| K1 | Sn | C |
| K2 | Si | I |
| K3 | Si | I |
| K4 | Si | I |
| K5 | Si | I |
| K6 | Si | I |
| K7 | Si | I |

TABLE 10-1 (continued)

| sample No. | solid phase A composition | crystal structure of solid phase A (in Bravais lattice notation) |
|---|---|---|
| K8 | Si | I |
| K9 | Si | I |
| K10 | Si | I |
| K11 | Si | I |
| graphite | | |

TABLE 10-2

| sample No. | solid phase B composition | crystal structure of solid phase B (in Bravais lattice notation) | initial discharge capacity (mAh) | capacity retention rate (%) |
|---|---|---|---|---|
| K1 | $FeSn_2$ | P | 2200 | 88 |
| K2 | $CoSi_2$ | F | 2360 | 92 |
| K3 | $FeSi_2$ | C | 2430 | 95 |
| K4 | $WSi_2$ | P | 2295 | 90 |
| K5 | $Ca_2Si$ | P, F | 2450 | 93 |
| K6 | $Mg_2Si$ | F | 2480 | 93 |
| K7 | $MnSi_{1.7}$ | I | 2110 | 84 |
| K8 | $Ru_2Si_3$ | P | 2300 | 89 |
| K9 | $CeSi_2$ | P, C | 2350 | 90 |
| K10 | $ReSi_2$ | I | 2100 | 85 |
| K11 | $TiSi_2$ | F, C | 2550 | 96 |
| graphite | - | - | 1800 | 89 |

As shown in TABLES 10-1 and 10-2, when the solid phase A and the solid phase B had crystal structures represented by different space groups, the initial discharge capacity and the capacity retention rate were improved as compared with those of the conventional example.

In particular, when the crystal structure of the solid phase B contains a crystal structure represented by at least one selected from the group consisting of space group C and space group F, the initial discharge capacity was improved.

Next, a plurality of samples were produced by varying the synthesizing time for mechanical alloying for the sample K11, in which the solid phase B was made of $TiSi_2$.

$TiSi_2$ may have the crystal structure of the space group Cmcm or the crystal structure of the space group Fddd as annotated by Hermann-Mauguin symbols, depending on the difference in the synthesizing conditions (described in e.g., "Brillouin Scattering of $TiSi_2$: elastic constants and related thermodynamic parameters" R. Pastorelli, C. Bottani, L. Miglio, M. Iannuzzi, A. Sabbadini, Microelectronic Engineering, 55(2001) 129-135). In general, the ratios of these crystal structures vary depending on the synthesizing time, and the ratio of the crystal structure represented by the space group Cmcm increases with an increase in the synthesizing time.

TABLE 11 shows the change of the crystal structure in the solid phase B ($TiSi_2$) in the sample K11 due to the difference in the synthesizing time. The change of the crystal structure was measured by the above-described WAXD measurement. By the WAXD measurement, a peak attributed to the $TiSi_2$ having the crystal structure represented by the space group Cmcm is observed near a diffraction angle $2\theta = 41°$, and a peak attributed to the $TiSi_2$ having the crystal structure represented by the space group Fddd is observed near a diffraction angle $2\theta = 39°$.

TABLE 11

| synthesizing time (Hr) | X-ray diffraction intensity (counts) Cmcm ($2\theta = 41°$) | X-ray diffraction intensity (counts) Fddd ($2\theta = 39°$) |
|---|---|---|
| 20 | 1700 | 2120 |
| 40 | 2300 | 1850 |
| 60 | 2720 | below detection limit |
| 80 | 3450 | below detection limit |
| 100 | 3995 | below detection limit |
| 120 | 4385 | below detection limit |
| 140 | 5205 | below detection limit |
| 160 | 6000 | below detection limit |

As shown in TABLE 11, the ratio of the crystal structure represented by the space group Cmcm increased with an increase in the synthesizing time. When the synthesizing time was 160 hours, the solid phase B consisted only of the crystal structure represented by the space group Cmcm.

Of the negative electrode materials shown in TABLE 11, the sample in which both the crystal structure represented by the space group Fddd and the crystal structure represented by the space group Cmcm were present in the solid phase B (synthesizing time: 40 hours) and the sample in which the solid phase B consisted only of the crystal structure represented by the space group Cmcm (synthesizing time: 160 hours) were used to produce non-aqueous electrolyte secondary batteries, and the battery characteristics were evaluated. After evaluating the battery characteristics, only the negative electrode materials were collected, and the WAXD measurement was performed again to examine the change in the crystal structure of the solid phase B.

The results are shown in TABLE 12.

TABLE 12

| synthesizing time (Hr) | X-ray diffraction intensity (counts) Cmcm ($2\theta=41°$) after charge/discharge cycle test | X-ray diffraction intensity (counts) Fddd ($2\theta=39°$) after charge/discharge cycle test | capacity retention rate (%) |
|---|---|---|---|
| 40 | 1900 | 2590 | 99.3 |
| 160 | 5465 | below detection limit | 99.7 |

As shown in TABLE 12, the capacity retention rate was more improved in the sample whose synthesizing time was 40 hours, than in the sample whose synthesizing time was 160 hours. That is, it can be said that it is more preferable that $TiSi_2$ in the solid phase B is made of the crystal structure represented by the space group Cmcm.

In addition, it is seen that the ratio of the crystal structure represented by the space group Fddd is increased in the sample whose synthesizing time was 40 hour, after the charge/discharge cycle test. On the other hand, no such change is observed for the sample whose synthesizing time was 160 hours. From this, it seems, for example, that the crystal structure represented by the space group Cmcm is effective for suppressing deterioration due to charge/discharge cycles, and that one reason for the deterioration is that $TiSi_2$ in the solid phase B changes its crystal structure to the crystal structure represented by the space group Fddd.

The invention may be embodied in other forms without departing from the spirit or essential characteristics thereof. The embodiments disclosed in this application are to be considered in all respects as illustrative and not limiting. The scope of the invention is indicated by the appended claims rather than by the foregoing description, and all changes which come within the meaning and range of equivalency of the claims are intended to be embraced therein.

**Claims**

1. A negative electrode material for a non-aqueous electrolyte secondary battery capable of reversibly absorbing and desorbing lithium,

comprising a solid phase A and a solid phase B that have different compositions; and

having a structure in which a surface around the solid phase A is entirely or partly covered by the solid phase B,

wherein the solid phase A contains at least one element selected from the group consisting of silicon, tin and zinc, and

the solid phase B contains said at least one element, and at least one element selected from the group consisting of Group IIA elements, transition elements, Group IIB elements, Group IIIB elements and Group IVB elements, and;

wherein

a : the solid phase A is in at least one state selected from the group consisting of an amorphous state and a low crystalline state,

b : a crystallite size of the solid phase A is in the range of at least 5 nm and at most 100 nm, or

c : the solid phase A contains a first crystal structure, and

the solid phase B contains a second crystal structure represented by a space group differing from the space group that represents the first crystal structure.

2. The negative electrode material for a non-aqueous electrolyte secondary battery according to claim 1,

wherein the solid phase A is in at least one state selected from the group consisting of an amorphous state and a low crystalline state, and

no peak attributed to a crystal plane of the solid phase A is present on a diffraction line obtained by a wide angle X-ray diffraction measurement (X-ray diffraction measurement in a range of a diffraction angle $2\theta$ of $10°$ to $80°$, when using $CuK_\alpha$ radiation as an X-ray source).

3. The negative electrode material for a non-aqueous electrolyte secondary battery according to claim 1,

wherein the solid phase Ais in at least one state selected from the group consisting of an amorphous state and a low crystalline state, and

the solid phase A is a solid phase in at least one state selected from the group consisting of an amorphous state and a low crystalline state, even after a heat treatment at $100°C$ or higher.

4. The negative electrode material for a non-aqueous electrolyte secondary battery according to claim 1,

wherein the solid phase A is in at least one state selected from the group consisting of an amorphous state and a low crystalline state, and

the solid phase A is a solid phase in which a crystallite size of the solid phase A is in the range of at least 5 nm and at most 100 nm, when a heat treatment at $100°C$ or higher is performed.

5. The negative electrode material for a non-aqueous electrolyte secondary battery according to claim 1,

wherein a crystallite size of the solid phase A is in the range of at least 5 nm and at most 100 nm, and

the solid phase A is a solid phase in which a crystallite size of the solid phase A is in the range of at least 5 nm and at most 100 nm, when a heat treatment at $100°C$ or higher is performed.

6. The negative electrode material for a non-aqueous electrolyte secondary battery according to claim 1,

wherein the solid phase A contains a first crystal structure,

the solid phase B contains a second crystal structure represented by a space group differing from the space group that represents the first crystal structure, and

a ratio of the second crystal structure in the solid phase B is in the range of at least 60 wt% and at most 95 wt%.

7. The negative electrode material for a non-aqueous electrolyte secondary battery according to claim 1,

wherein the solid phase A contains a first crystal structure,

the solid phase B contains a second crystal structure represented by a space group differing from the space group that represents the first crystal structure, and

the second crystal structure in the solid phase B contains a crystal structure represented by at least one selected from the group consisting of space group C and space group F, where the space group C and the space group F are space groups in Bravais lattice notation.

8. The negative electrode material for a non-aqueous electrolyte secondary battery according to claim 7,

wherein the second crystal structure in the solid phase B contains a crystal structure represented by the space group Cmcm as annotated by Hermann-Mauguin symbols.

9. The negative electrode material for a non-aqueous electrolyte secondary battery according to claim 1, wherein a weight ratio of the solid phase A is in the range of at least 5 wt% and at most 40 wt% and a weight ratio of the solid phase B is in the range of at least 60 wt% and at most 95 wt% in the negative electrode material.

10. The negative electrode material for a non-aqueous electrolyte secondary battery according to claim 1, wherein the solid phase A comprises Si and the solid phase B comprises Ti and Si.

11. The negative electrode material for a non-aqueous electrolyte secondary battery according to claim 10, wherein the solid phase B contains $TiSi_2$.

12. The negative electrode material for a non-aqueous electrolyte secondary battery according to claim 11, wherein the $TiSi_2$ comprises a crystal structure represented by the space group Cmcm as annotated by Hermann-Mauguin symbols.

13. The negative electrode material for a non-aqueous electrolyte secondary battery according to claim 11, wherein the solid phase B contains an amorphous body of at least one element selected from the group consisting of Ti and Si.

14. A non-aqueous electrolyte secondary battery comprising:

    a negative electrode containing the negative electrode material for a non-aqueous electrolyte secondary battery according to claim 1;
    a positive electrode capable of reversibly absorbing and desorbing lithium; and
    a non-aqueous electrolyte having lithium ion conductivity.

15. A method for producing a negative electrode material for a non-aqueous electrolyte secondary battery, comprising:

    a first step of mixing a material containing at least one element selected from the group consisting of silicon, tin and zinc with a material containing at least one element selected from the group consisting of Group IIA elements, transition elements, Group IIB elements, Group IIIB elements and Group IVB elements, and melting the resulting material,
    a second step of forming a solidified material by quenching and solidifying the melted material; and
    a third step of obtaining a powder comprising a solid phase A and a solid phase B that have different compositions and having a structure in which a surface around the solid phase A is entirely or partly covered by the solid phase B, by performing a mechanical alloying process on the solidified material.

16. The method for producing a negative electrode material for a non-aqueous electrolyte secondary battery according to claim 15, further comprising a step of heat treating the powder, after the third step.

FIG. 1

EP 1 396 894 A2

FIG. 2

EP 1 396 894 A2

FIG. 3